# EUROPEAN PATENT APPLICATION

(11) **EP 4 700 549 A1**
(43) Date of publication of application: **25.02.2026**
(21) Application number: 24861730.0
(22) Date of filing: 31.07.2024
(51) Int. Cl.: G06F 3/0481

(54) **CROSS-APPLICATION INTERFACE DISPLAY METHOD AND ELECTRONIC DEVICE**

(30) Priority: 05.09.2023 CN 202311141099
(71) Applicant: Huawei Technologies Co., Ltd., Shenzhen, Guangdong 518129 (CN)
(72) Inventor: DING, Yao, Shenzhen, Guangdong 518129 (CN); ZHANG, Zhijun, Shenzhen, Guangdong 518129 (CN)
(74) Representative: Thun, Clemens
(86) International application number: PCT/CN2024/108871
(87) International publication number: WO 2025/050885

(57) **Abstract**

This application provides a cross-application interface display method and an electronic device. The method includes: displaying a user interface of a first application, where the user interface includes first shared content of a second application; receiving a first operation performed by a user on the first shared content; and in response to the first operation, running a vertical domain service independent process of the second application and displaying a first interface of a vertical domain service of the second application; and when a main process of the second application is running, displaying a second interface of the main process of the second application, where the vertical domain service independent process is different from the main process. The method provided in this application enables the user to quickly use, in the first application, a service provided by the second application, to resolve problems of a long interaction path, cumbersome operations, and poor user experience that are caused by a need of starting the main process of the second application when the service provided by the second application is used in the first application.

## Description

### CROSS-APPLICATION INTERFACE DISPLAY METHOD AND ELECTRONIC DEVICE

This application claims priority to Chinese Patent Application No. 2023111410992, filed with the China National Intellectual Property Administration on September 5, 2023 and entitled "CROSS-APPLICATION INTERFACE DISPLAY METHOD AND ELECTRONIC DEVICE", which is incorporated herein by reference in its entirety.

### TECHNICAL FIELD

This application relates to the field of image processing and display technologies, and more specifically, to a cross-application interface display method and an electronic device.

### BACKGROUND

As electronic technologies rapidly develop, there are increasingly more types of applications on an electronic device. When a user uses an application, a service provided by an application B may need to be used in an application A.

Currently, when the user needs to use, in the application A being used, the service provided by the application B, generally, the user is guided in the application A to start the application B in a browser through a plurality of redirections, or the user can use the service provided by the application B only after an applet corresponding to the application B is started in the application A to start the application B. In the foregoing two implementations, an interaction path between the applications is long, and the user cannot quickly redirect to and use the service provided by the application B, to increase power consumption of the electronic device to some extent.

Therefore, how the user implements a service redirection and instant access between the applications is a problem that needs to be resolved currently.

### SUMMARY

This application provides a cross-application interface display method and an electronic device. The method resolves problems that an interaction path is long and power consumption of an electronic device is increased because an application B needs to be started when a service provided by the application B is used in an application A, to improve user experience.

According to a first aspect, this application provides a cross-application interface display method. The method according to the first aspect may be performed by an electronic device, or may be performed by a module (for example, a processor, a chip, or a chip system) used in the electronic device, or may be implemented by a logical node, a logical module, or software that can implement all or some functions of the electronic device. This is not limited in this application.

Specifically, the method includes: displaying a user interface of a first application, where the user interface includes first shared content of a second application; receiving a first operation performed by a user on the first shared content; and in response to the first operation, running a vertical domain service independent process of the second application and displaying a first interface of a vertical domain service of the second application; and when a main process of the second application is running, displaying a second interface of the main process of the second application. The vertical domain service independent process is different from the main process.

In the method according to the first aspect, after the electronic device receives the first operation performed by the user on the shared content of the second application on the user interface of the first application, the electronic device runs the vertical domain service independent process of the second application in the first application to display the first interface provided by the vertical domain service of the second application. The first interface can be displayed without starting the main process of the second application. The method enables the user to quickly use, in the first application without starting the main process of the second application, a service (for example, preview or sharing) provided by the second application. This avoids a long interaction path, cumbersome operations, and power waste of the electronic device that are caused by starting the main process of the second application, to improve user experience.

For example, the first operation may be a preview (opening) operation, a share operation, an edit operation, or the like on the first shared content of the second application. Certainly, the first operation may alternatively be another operation.

It should be understood that the first shared content of the second application may be a link related to the shared content, generated in the second application, and sent to the first application, or may be a QR code related to the shared content, generated in the second application, and sent to the first application. Certainly, the shared content of the second application may alternatively be in another form. This is not limited in embodiments of this application.

In a possible implementation of the first aspect, running the vertical domain service independent process of the second application includes: creating the vertical domain service independent process, where the vertical domain service independent process is used to run the vertical domain service of the second application, and the vertical domain service is used to represent an interface displayed when the second application is run in response to the first operation; when the vertical domain service is started, drawing the first interface based on the vertical domain service; and loading the first interface into the first application. In addition, when the vertical domain service independent process is already running, a corresponding instance may be added to the vertical domain service independent process in response to an operation of the user, to display a corresponding interface through the instance. The instance may be a window instance newly added in an original thread of the vertical domain service independent process.

In this implementation, the electronic device creates the vertical domain service independent process for the second application based on the first operation of the user. The vertical domain service independent process may load an independent resource required by the application, and does not depend on the main process and a resource of the second application. In this way, the electronic device can have low power consumption. After the vertical domain service is started, the first interface is drawn based on the vertical domain service. Then, the first interface is loaded into the first application. In this way, the interface that has been set for the second application can be displayed in the first application.

In some examples, the vertical domain service of the second application may be developed by a developer based on a vertical domain service template in a development phase of the application. It may also be understood that the developer may set, based on the vertical domain service template, the display interface that needs to be loaded.

In a possible implementation of the first aspect, before displaying the first interface of the vertical domain service of the second application, the method further includes: determining a vertical domain service control in the first application, where the vertical domain service control is used to limit a display region of the first interface; and displaying the first interface in the vertical domain service control.

In this implementation, the electronic device creates the vertical domain service control in the first application and displays the first interface in the vertical domain service control. The vertical domain service control can determine a display position or the display region of the first interface.

In a possible implementation of the first aspect, the first application corresponds to a graphics node tree. The graphics node tree includes a graphics node tree identifier. The graphics node tree identifier includes an identifier of the vertical domain service control. Loading the first interface into the first application includes: mounting a node of the first interface on the graphics node tree of the first application based on the identifier of the vertical domain service control, and loading the first interface into the first application based on the graphics node tree on which the node of the first interface is mounted.

In this implementation, a mounting position of the first interface of the second application on the interface of the first application can be determined through the identifier of the vertical domain service control on the graphics node tree.

In a possible implementation of the first aspect, the vertical domain service independent process may run a first vertical domain service and a second vertical domain service. The first vertical domain service includes a control corresponding to the second vertical domain service. The first vertical domain service is different from the second vertical domain service.

It should be understood that the first vertical domain service and the second vertical domain service are run in the same vertical domain service independent process.

In this implementation, the vertical domain service independent process may load a plurality of vertical domain services. The first vertical domain service in the plurality of vertical domain services includes the control corresponding to the second vertical domain service. When using the first vertical domain service, the user can quickly switch to the second vertical domain service as needed, to improve user experience.

For example, when the second application is a document application, in response to an operation of previewing the document by the user, the vertical domain service independent process created by the electronic device may run a plurality of vertical domain services, for example, a preview vertical domain service and an editing vertical domain service. The preview vertical domain service includes a control of the editing vertical domain service. When the user needs to edit the document after previewing it, the preview vertical domain service can be directly switched to the editing vertical domain service, to improve office efficiency of the user.

In a possible implementation of the first aspect, the method further includes: displaying a user interface of a third application, where the user interface of the third application includes second shared content of the second application; receiving a second operation performed by the user on the second shared content of the second application; and in response to the second operation on the second shared content, running a vertical domain service independent process of the second application and displaying a third interface of a vertical domain service of the second application. The vertical domain service of the second application includes a display window of the third application. The display window of the third application is different from a display window of the first application.

In this implementation, when both the first application and the second application start the vertical domain service independent process of the second application, the electronic device creates a plurality of window instances in the vertical domain service provided by the second application, and separately sets the first interface based on the plurality of window instances, to ensure that each vertical domain service control corresponds to one window and displays its own interface without affecting each other's interaction.

It should be noted that the first operation and the second operation may be operations of a same type, for example, both may be opening operations on the shared content. The vertical domain service independent process that is of the second application and that is started by the third application and the vertical domain service independent process that is of the second application and that is started by the first application are a same vertical domain service independent process. The vertical domain service provided for the first application or the third application when the vertical domain service independent process of the second application is run is related to an operation of the user.

For example, when the operation of the user on the user interface of the first application is an opening operation on the first shared content, the vertical domain service provided for the first application when the vertical domain service independent process of the second application is run is an opening vertical domain service. When the operation of the user on the user interface of the third application is also an opening operation on the second shared content, the vertical domain service provided for the third application when the vertical domain service independent process of the second application is run is also an opening vertical domain service.

For another example, when the operation of the user on the user interface of the first application is a share operation on the first shared content, the vertical domain service provided for the first application when the vertical domain service independent process of the second application is run is a sharing vertical domain service. When the operation of the user on the user interface of the third application is an opening operation on the second shared content, the vertical domain service provided for the third application when the vertical domain service independent process of the second application is run is an opening vertical domain service. In this case, although both the first application and the third application start the vertical domain service independent process of the second application, the vertical domain services provided by the second application are different, and an interface displayed by the vertical domain service is also determined based on the shared content in the first application or the third application.

In a possible implementation of the first aspect, the vertical domain service independent process of the second application is run in a foreground when at least one of the first application and the third application is run in the foreground.

It should be noted that the first interface is displayed in the foreground when the first application is run in the foreground, and the first interface is displayed in the foreground when the third application is run in the foreground. Alternatively, the first interface is run in a background when the first application is run in the background. Alternatively, the first interface is run in the background when the third application is run in the background.

In a possible implementation of the first aspect, the vertical domain service independent process of the second application is run in the background when both the first application and the third application are run in the background.

In a possible implementation of the first aspect or the second aspect, the first interface of the vertical domain service of the second application is displayed in at least one of a full-screen mode, a floating window mode, or a control embedding mode. Alternatively, the vertical domain service may display the interface in a full-modal mode, a semi-modal mode, or the like.

According to a second aspect, this application provides another cross-application interface display method. The method according to the second aspect may be performed by an electronic device, or may be performed by a module (for example, a processor, a chip, or a chip system) used in the electronic device, or may be implemented by a logical node, a logical module, or software that can implement all or some functions of the electronic device. This is not limited in this application.

Specifically, the method includes: displaying a user interface of a first application, where the user interface includes first shared content of a second application; receiving a first operation performed by a user on the first shared content; determining at least one target application in response to the first operation, where a configuration file of the first operation is registered in the at least one target application; displaying the at least one target application to the user on a display interface of the first application; receiving a third operation performed by the user on the at least one target application, where the third operation is used to select a fourth application from the at least one target application; and in response to the third operation, running a vertical domain service independent process of the fourth application and displaying a first interface of a vertical domain service of the fourth application; and when a main process of the second application is running, displaying a second interface of the main process of the fourth application. The vertical domain service independent process is different from the main process.

In the method according to the second aspect, after the electronic device receives the first operation performed by the user on the shared content of the second application on the user interface of the first application, the electronic device may determine a plurality of target applications corresponding to the first operation. Then, the electronic device may display application selection boxes of the plurality of target applications to the user for selection by the user. Finally, the electronic device runs the vertical domain service independent process of the fourth application in the first application based on a requirement of the user to display the first interface provided by the vertical domain service of the fourth application. The first interface can be displayed without starting the main process of the fourth application. The method enables the user to quickly use, in the first application without starting the main process of the fourth application, a service (for example, a sharing service) provided by the fourth application. This avoids a long interaction path, cumbersome operations, and power waste of the electronic device that are caused by starting the main process of the fourth application, to improve user experience.

For example, when the first operation is a share operation, a plurality of applications that support the share operation are displayed to the user, for example, an application A, an application B, and an application C. The user may select, based on a requirement of the user, the application C for sharing. In this case, the first interface displayed in the first interface is a first interface corresponding to the application C.

According to a third aspect, a communication apparatus is provided. The communication apparatus includes a unit configured to perform each step in any one of the first aspect or the possible implementations of the first aspect, or a unit configured to perform each step in any one of the second aspect or the possible implementations of the second aspect.

According to a fourth aspect, an electronic device is provided. The electronic device includes a processor and a memory. The memory is configured to store a computer program. The processor is configured to invoke the computer program from the memory and run the computer program, to enable the electronic device to perform the method in any one of the first aspect or the possible implementations of the first aspect, or perform the method in any one of the second aspect or the possible implementations of the second aspect.

According to a fifth aspect, a computer program product is provided. The computer program product includes a computer program. When the computer program is executed by a processor, the computer program is used to perform the method in any one of the first aspect or the possible implementations of the first aspect, or perform the method in any one of the second aspect or the possible implementations of the second aspect.

According to a sixth aspect, a computer-readable storage medium is provided. The computer-readable storage medium stores a computer program. When the computer program is executed, the computer program is used to perform the method in any one of the first aspect or the possible implementations of the first aspect, or perform the method in any one of the second aspect or the possible implementations of the second aspect.

According to a seventh aspect, a chip is provided. The chip includes a processor, configured to invoke a computer program from a memory and run the computer program, to enable a communication device in which the chip is installed to perform the method in any one of the first aspect or the possible implementations of the first aspect, or perform the method in any one of the second aspect or the possible implementations of the second aspect.

### BRIEF DESCRIPTION OF DRAWINGS

FIG. 1(a) to FIG. 1(d) are a diagram of previewing shared content of an application B in an application A in the related technology;
FIG. 2 is a diagram of a structure of an electronic device 100;
FIG. 3 is a diagram of a software structure of an electronic device 100 according to an embodiment of this application;
FIG. 4(a) and FIG. 4(b) are a diagram of an example of cross-application interface display according to an embodiment of this application;
FIG. 5 is a schematic flowchart of starting a vertical domain service according to an embodiment of this application;
FIG. 6(a) to FIG. 6(d) are a diagram of another example of cross-application interface display according to an embodiment of this application;
FIG. 7(a) to FIG. 7(d) are a diagram of another example of cross-application interface display according to an embodiment of this application;
FIG. 8 is a schematic flowchart of a voice-activated ride-hailing service according to an embodiment of this application;
FIG. 9(a) to FIG. 9(d) are a diagram of another example of cross-application interface display according to an embodiment of this application;
FIG. 10 is a diagram of a plurality of window instances corresponding to a vertical domain service template according to an embodiment of this application;
FIG. 11 is a schematic flowchart of an example of a cross-application interface display method 1100 according to an embodiment of this application;
FIG. 12 is a schematic flowchart of an example of another cross-application interface display method 1200 according to an embodiment of this application; and
FIG. 13 is a diagram of a structure of an electronic device according to this application.

### DESCRIPTION OF EMBODIMENTS

The following clearly and completely describes the technical solutions in embodiments of this application with reference to the accompanying drawings in embodiments of this application.

Terms used in the following embodiments are merely intended to describe specific embodiments, but are not intended to limit this application. The terms "one", "a", "an", "the", and "this" of singular forms used in this specification and the appended claims of this application are also intended to include expressions such as "one or more", unless otherwise specified in the context clearly. It should be further understood that in embodiments of this application, "one or more" means one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

"A plurality of" in embodiments of this application indicates two or more. It should be noted that in the descriptions of embodiments of this application, the terms such as "first" and "second" are merely intended for distinction in description, but should not be construed as indicating or implying relative importance or indicating or implying a sequence.

In some examples, when a user receives, in an application program (application, app) (an application for short) A being used, content shared by another user from an application B, and the user wants to preview the shared content from the application B, the electronic device guides, through redirections on an interface of the application A based on an operation of the user, the user to choose to open the shared content from the application B in a browser for preview.

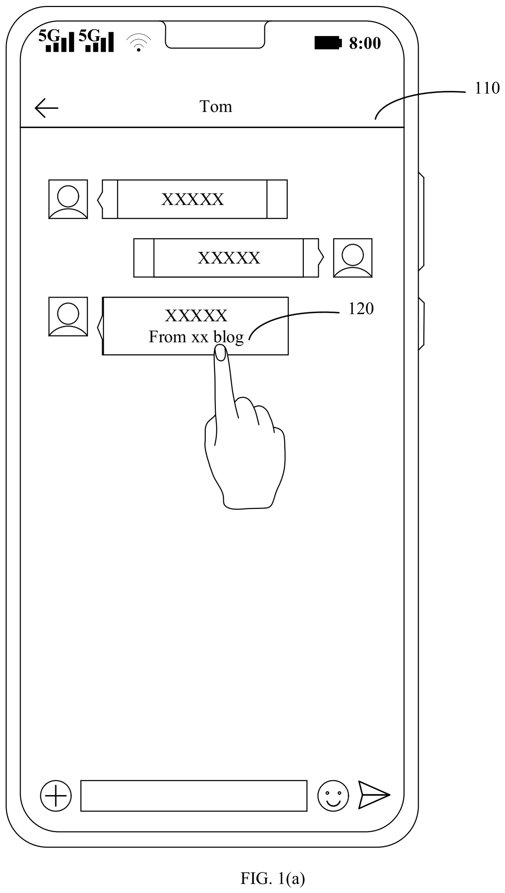

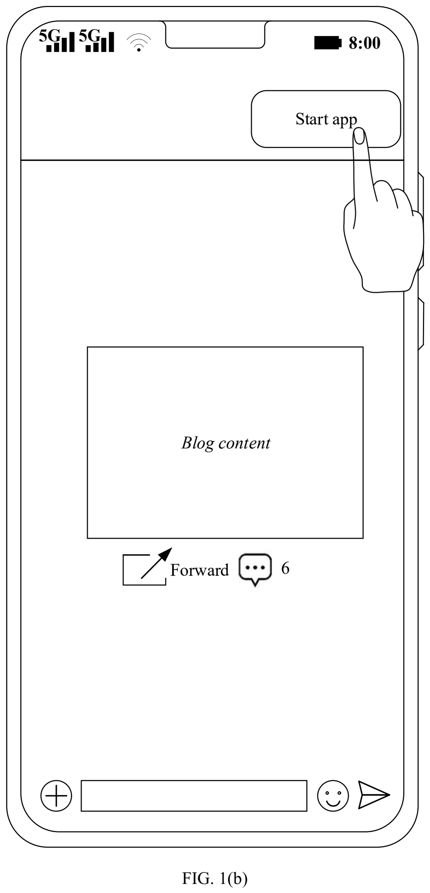

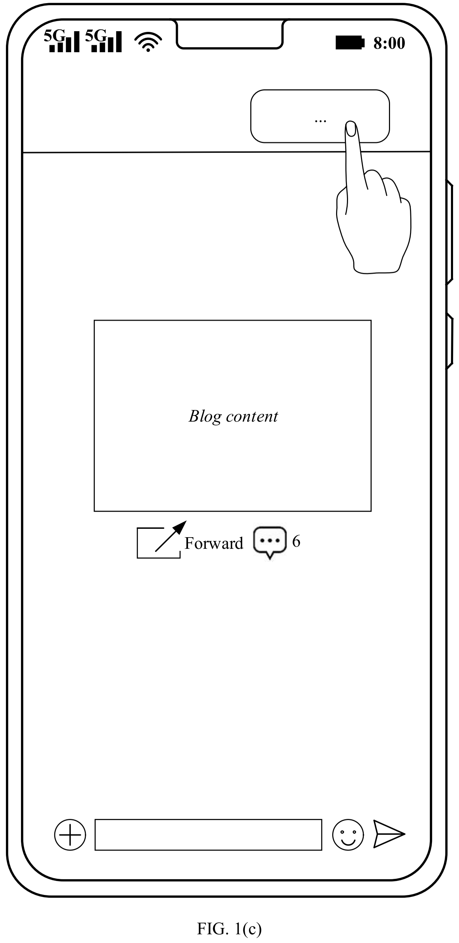

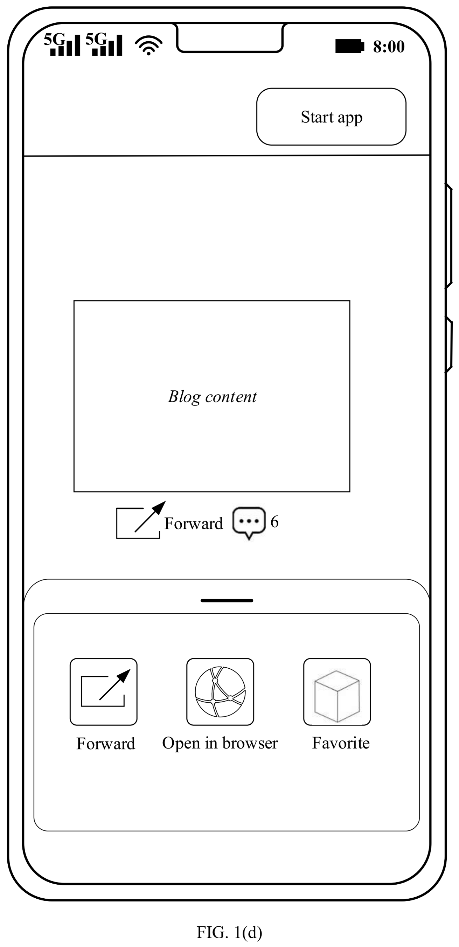

For example, FIG. 1(a) to FIG. 1(d) are a diagram of previewing shared content of an application B in an application A in the related technology. As shown in FIG. 1(a), a display interface is a chat interface 110 of the application A (for example, the application A may be MeeTime). When a user receives content 120 shared by another user from the application B (for example, the application B may be a blog^{®} application), the user may tap the shared content 120 from the application B to preview related content. When the user taps the shared content from the application B, the display interface is switched to an interface shown in FIG. 1(b). It can be learned from the interface shown in FIG. 1(b) that the user can view partial content of the application B in the application A. If the user wants to browse all of the shared content from the application B and comment information related to the content, the user can tap "Start app" to browse more content. After the user taps "Start app", the display interface is switched to an interface shown in FIG. 1(c). It can be learned from the interface shown in FIG. 1(c) that the user cannot directly start the app, and can only tap a menu bar in an upper right corner. The menu bar in the upper right corner includes an "Open in browser" option. As shown in FIG. 1(d), the menu bar also includes options such as Forward and Favorite. When the user taps "Open in browser", the application A may redirect to a browser, to finally preview all of the shared content from the application B in the browser.

It can be learned that when the user wants to open the shared content from the application B in the application A and browse all of the content, a plurality of redirections are needed for browsing in the browser, resulting in cumbersome operations and a long interaction path. The user cannot directly browse the shared content in one step, to compromise user experience and increase power consumption of an electronic device to some extent.

In another example of the related technology, some large-scale applications use an allowlist mechanism. After a request to start a specified application is received from a user, the target application is not started, but an allowlisted application is redirected to. The allowlisted application requires a developer of the application to develop an applet corresponding to the application. For example, the large-scale application is an application A, and an allowlist of the application A includes an application B. To enable a user to start the application B in the application A, a developer needs to develop an applet corresponding to the application B. When shared content from the application B is received in the application A, the application A needs to run the applet corresponding to the application B, to open detailed content of the shared content from the application B. This method requires additional development of the applet, to increase working and maintenance costs of the developer. Even if the application A includes the applet corresponding to the application B, the user may still be guided to download and install the application B, to compromise user experience. It should be understood that the large-scale application may be understood as an application with a good reputation and influence, namely, a top-ranked application, or an application whose size is greater than 50 MB, 60 MB, or 100 MB.

With reference to the foregoing content, a service (for example, preview, sharing, or editing) provided by an application B cannot be directly used in an application A currently. In view of this, the following embodiments of this application provide a cross-application interface display method. The method includes: An electronic device receives a first operation performed by a user on shared content of a second application on a user interface of a first application; and displays a first interface in the first application in response to the first operation of the user. The first application is an application being used by the user. The first interface is the same as an interface displayed in response to the first operation when a third application is running. The third application and the second application may be a same application or different applications. Through the method provided in this application, the user can quickly use, in the first application, a service provided by the second application, to avoid that an interaction path is long and power consumption of the electronic device is increased due to a plurality of redirections between the applications, and improve user experience while reducing application development costs.

In a possible application scenario, the cross-application interface display method provided in this application may be used when a user wants to quickly preview shared content of an application B in an application A without starting the application B.

In another possible application scenario, the cross-application interface display method provided in this application may be used when a user wants to quickly share shared content of an application B to an application C in an application A without starting the application B.

In another possible application scenario, the cross-application interface display method provided in this application may be used when a user wants to quickly use a ride-hailing service on a desktop without starting a ride-hailing application.

The following describes an electronic device to which the cross-application interface display method provided in this application is applicable.

The electronic device in embodiments of this application may include but is not limited to at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device is not particularly limited in embodiments of this application.

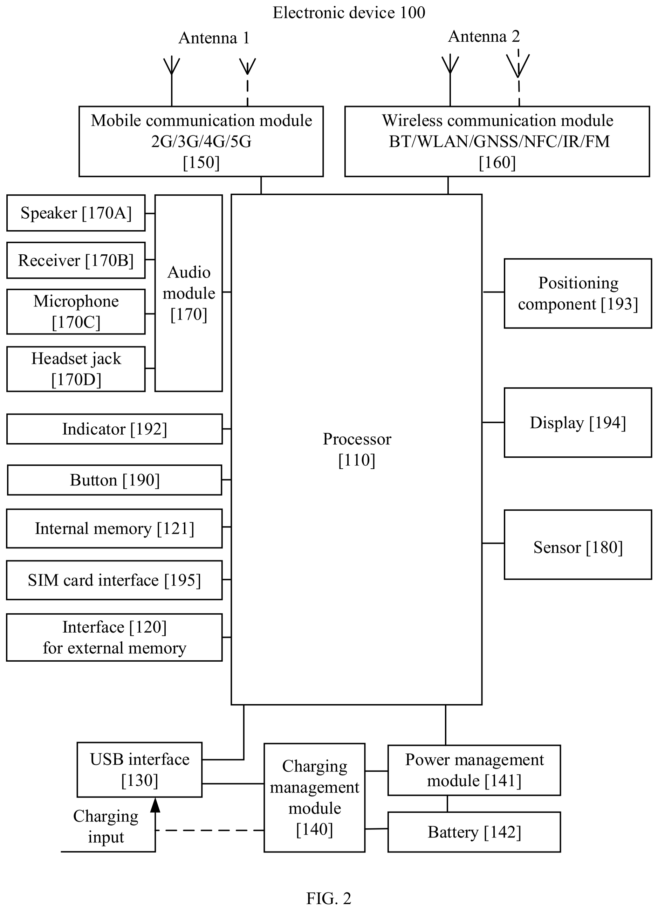

FIG. 2 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor 180, a button 190, an indicator 191, a subscriber identity module (subscriber identity module, SIM) card interface 192, a positioning component 193, a display 194, and the like.

It may be understood that the structure shown in this embodiment of this application does not constitute a specific limitation on the electronic device 100. In some other embodiments of this application, the electronic device 100 may include more or fewer components than those shown in FIG. 1, have some components combined, have some components split, or have different component arrangements. The components in FIG. 1 may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 may be a cache. The memory may store instructions or data that has been used or frequently used by the processor 110. If the processor 110 needs to use the instructions or the data, the processor 110 may directly invoke the instructions or the data from the memory. This avoids repeated access, reduces waiting time of the processor 110, and improves system efficiency.

For example, the memory is configured to execute application code in the solutions of this application, and the processor 110 controls its execution. The processor 110 is configured to execute the application code stored in the memory, to control the electronic device 100 to implement the cross-application interface display method provided in embodiments of this application.

The electronic device 100 may implement a display function through the GPU, the display 194, the application processor, and the like. The GPU is a microprocessor for image processing, and is connected to the display 194 and the application processor. The GPU is configured to perform mathematical and geometric computation, and graphics rendering. The processor 110 may include one or more GPUs, which execute program instructions to generate or change display information.

The sensor 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like, and is configured to convert various signals from the outside into electrical signals or information in another required form for output.

The touch sensor is also referred to as a "touch panel". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the processor, to determine a touch event type. A visual output related to the touch operation may be provided through the display 194. In some other embodiments, the touch sensor may alternatively be disposed on a surface of the electronic device 100, and is at a position different from that of the display 194.

For example, in embodiments of this application, the touch sensor may detect a drag operation of a user, and transfer the detected drag operation to the processor, to determine a drag event type.

The display 194 is configured to display data such as an image, text, and a video. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

For example, in embodiments of this application, the display 194 is configured to display a display interface of an application B in an application A based on a cross-system interface display method provided in this application.

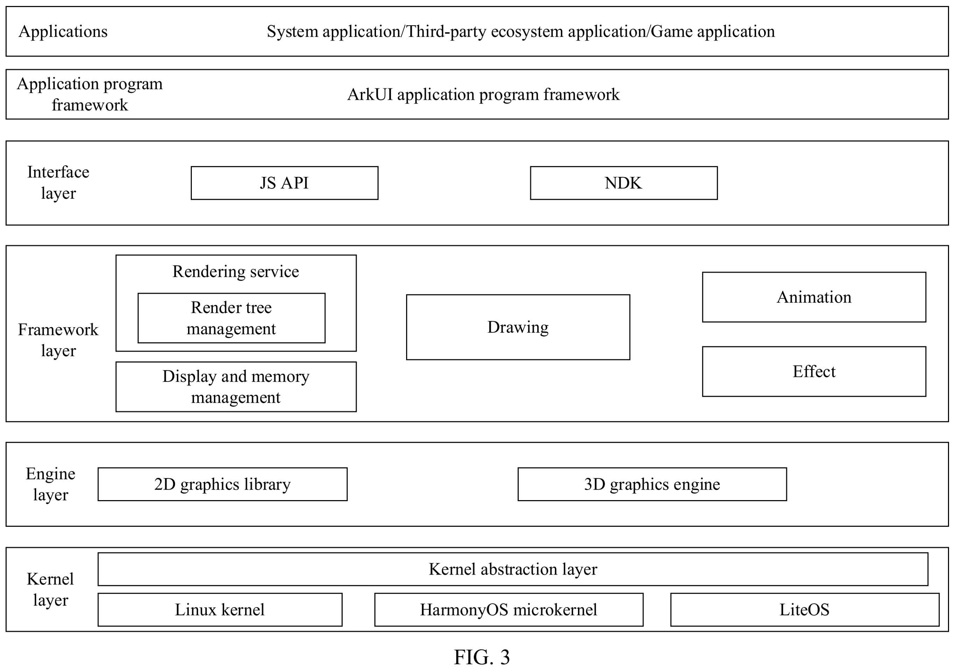

The electronic device 100 may alternatively use another architecture. In embodiments of the present invention, HarmonyOS (Harmony) is used as an example to describe a software architecture of the electronic device 100. FIG. 3 is a diagram of a software structure of an electronic device 100 according to an embodiment of this application.

In some implementation solutions, HarmonyOS includes four layers. In a layered architecture, software is divided into several layers, and each layer has a clear role and task. The layers communicate with each other through a software interface. The layers are an application layer, an application framework layer, a HarmonyOS graphics stack, and a kernel layer from top to bottom. The HarmonyOS graphics stack includes an interface layer, a framework layer, and an engine layer.

The application layer includes a system application and a third-party application. An application on the electronic device may be the system application (for example, an application installed on the electronic device when an operating system is installed before the electronic device is delivered from a factory), or may be the third-party application (for example, an application downloaded and installed by a user from an application store). This is not limited in embodiments of this application. For example, the application may include the system application (not shown in FIG. 3) like camera, gallery, calendar, phone, map, navigation, WLAN, Bluetooth, music, videos, game, shopping, travel, instant messaging (such as messaging), and Celia Suggestions. The application may further include the third-party application (not shown in FIG. 3) like TikTok^{®}, WeChat^{®}, Taobao^{®}, and Weibo^{®}. In HarmonyOS, the application is built based on a stage model or fa model.

The application framework layer provides a HarmonyOS application with a user program framework and meta-capability framework for a plurality of languages, such as Java, C, C++, JavaScript, and TS, as well as multilanguage framework applicationming interfaces (applicationming interfaces, APIs) for exposing various software and hardware services. For example, the application framework layer may be an ArkUI application framework.

The interface layer of the HarmonyOS graphics stack provides native API capabilities of graphics, including WebGL, a native drawing capability, an OpenGL instruction-level drawing capability, and the like.

The framework layer of the HarmonyOS graphics stack includes five modules: rendering service, drawing, animation, effect, and display and memory management. The rendering service module provides a drawing capability of a UI framework. Its core responsibility is to convert an ArkUI control description into drawing tree information and perform optimal path rendering based on a corresponding rendering strategy. It is also responsible for a core underlying mechanism of UI sharing in multi-window smoothness and spatial mode. The drawing module provides a standardized interface in a graphics subsystem, and mainly completes basic functions such as 2D rendering, 3D rendering, and rendering engine management. The animation module provides related capabilities of an animation engine. The effect module mainly processes image effects, rendering effects, and other effects, including multi-effect series and parallel processing, and adding a rendering effect and control interaction effect during layout. The display and memory management module is a main module for decoupling the graphics stack and hardware. It defines display and memory management capabilities of HarmonyOS.

For example, in embodiments of this application, the drawing module of the framework layer is configured to draw a first interface based on a vertical domain service template provided by a second application. Render tree management in the rendering service module of the framework layer is configured to load the drawn first interface to a graphics node tree of a first application, so that the first interface can be displayed in the first application.

The engine layer of the HarmonyOS graphics stack includes two modules: a 2D graphics library and a 3D graphics engine. The 2D graphics library provides underlying APIs for drawing 2D graphics and text.

HarmonyOS uses a multi-kernel design. Optionally, the kernel layer includes a Linux kernel, a HarmonyOS microkernel, and LiteOS. Through this design, appropriate system kernels can be selected for devices with different device capabilities. The kernel layer further includes a kernel abstraction layer (Kernel Abstract Layer) that provides basic kernel capabilities for another HarmonyOS layer, such as process management, thread management, memory management, file system management, network management, and peripheral management.

It should be noted that in FIG. 3, HarmonyOS (Harmony) with a layered architecture is merely used as an example to describe an interface display process in a cross-application interface display scenario. A specific architecture of a software system of the electronic device is not limited in this application. For detailed descriptions of a software system with another architecture, refer to the conventional technology. For example, the software system may alternatively include but is not limited to Symbian (Symbian)^{®}, Windows^{®}, iOS (iOS)^{®}, BlackBerry (Blackberry)^{®}, Android^{®}, or another operating system. This is not limited in this application.

For ease of understanding, in the following embodiments of this application, an electronic device having the structures shown in FIG. 2 and FIG. 3 is used as an example to describe in detail the cross-application interface display method provided in embodiments of this application with reference to the accompanying drawings and application scenarios.

The following specifically describes the cross-application interface display method provided in this application by using an example in which the electronic device is a mobile phone.

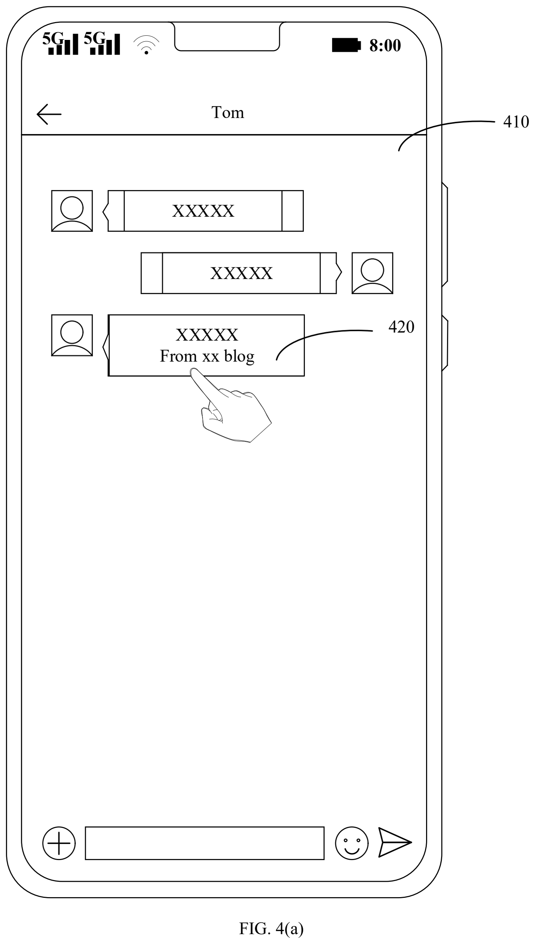

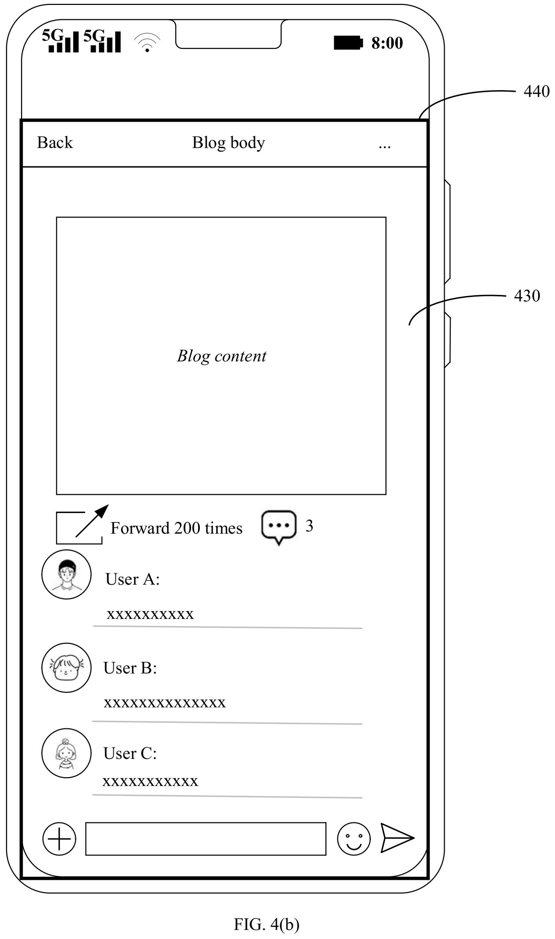

FIG. 4(a) and FIG. 4(b) are a diagram of an example of cross-application interface display according to an embodiment of this application. FIG. 4(a) shows a display interface 410 of an application A (for example, the application A may be MeeTime). It can be learned from FIG. 4(a) that shared content 420 from an application B (for example, the application B may be a blog^{®} application) is received in the application A. Specifically, a link related to the shared content is generated in the application B and sent to the application A. Alternatively, a QR code related to the shared content may be generated in the application B and sent to the application A. Certainly, the shared content from the application B may alternatively be shared in another form. In embodiments of this application, generating a related link is used as an example for description. In response to a preview operation (the preview operation may also be understood as an opening operation) performed by a user on the shared content from the application B, the display interface is switched from the interface shown in FIG. 4(a) to an interface shown in FIG. 4(b). In response to the preview operation performed by the user on the shared content from the application B, an electronic device can directly display a preview interface 430 of the shared content from the application B in the application A, to avoid a plurality of redirections between the applications and improve user experience.

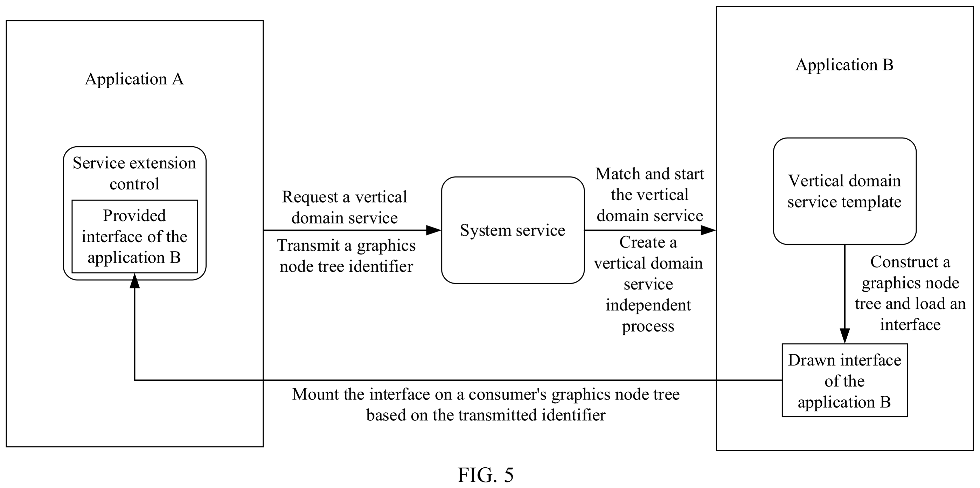

With reference to FIG. 5, the following illustrates how the electronic device switches from the interface shown in FIG. 4(a) to the interface shown in FIG. 4(b).

FIG. 5 is a schematic flowchart of starting a vertical domain service according to an embodiment of this application. As shown in FIG. 5, in response to a preview operation (the preview operation may also be understood as an opening operation) performed by a user on shared content of an application B on a display interface of an application A, the application A triggers interface invocation, and a system of an electronic device creates a vertical domain service control (440 shown in FIG. 4(b). It should be understood that the vertical domain service control is used to display a preview display interface. After the vertical domain service control 440 is created, the application A sends a first request to the system of the electronic device. The first request is used to request a preview vertical domain service.

It should be noted that the system of the electronic device in embodiments of this application may include but is not limited to HarmonyOS (Harmony), Symbian (Symbian)^{®}, Windows^{®}, iOS (iOS)^{®}, BlackBerry (Blackberry)^{®}, Android^{®}, or another operating system.

For example, a function related to the vertical domain service may be enabled through an interface created by a system service of the electronic device. For example, the vertical domain service control is created through the interface of the system service of the electronic device. For another example, the application initiates the first request to the interface of the system service of the electronic device. For another example, a redirection between the applications is implemented through the interface of the system service of the electronic device.

It should be understood that the vertical domain service corresponds to an operation of the user. If the operation of the user is previewing the shared content of the application B, the vertical domain service corresponds to the preview vertical domain service. If the operation of the user is editing the shared content of the application B, the vertical domain service corresponds to an editing vertical domain service. If the operation of the user is sharing the shared content of the application B, the vertical domain service corresponds to a sharing vertical domain service. Certainly, the operation of the user may alternatively be another operation. In this case, the vertical domain service corresponds to another vertical domain service, for example, an editing and sharing vertical domain service or a saving vertical domain service, which is not enumerated herein one by one.

In a possible implementation, when the application A sends the first request to the system of the electronic device, the first request includes a graphics node tree identifier of the vertical domain service control. It should be understood that the application A corresponds to a graphics node tree. The graphics node tree includes graphics node tree identifiers of a plurality of controls on the display interface of the application A. The graphics node tree identifier includes an identifier of the vertical domain service control. The identifier of the vertical domain service control is used to identify a mounting position of a display interface of the application B on the interface of the application A.

After receiving the first request, the system of the electronic device checks security of the first request, and matches at least one target application based on the first request after the check succeeds. The target application includes a vertical domain service corresponding to the first request. In the example shown in FIG. 4(a) and FIG. 4(b), if the user wants to preview the shared content 420 of the application B, the vertical domain service is the preview vertical domain service provided by the application B. It should be understood that when matching the target application based on the first request, the system of the electronic device performs matching based on information about the application and a type of the vertical domain service. A function of previewing the shared content of the application B is registered in a configuration file of the application B.

In some examples, when the user wants to share the shared content of the application B, the system of the electronic device performs matching based on the type of the vertical domain service. The sharing vertical domain service may correspond to a plurality of target applications. For example, the sharing vertical domain service may correspond to an application C, an application D, and an application E. It should be noted that a sharing function should be registered in configuration files of the application C, the application D, and the application E.

In the example shown in FIG. 4(a) and FIG. 4(b), after the system of the electronic device matches the target application, a vertical domain service independent process is created and started based on a matching result. The vertical domain service independent process is used to load a preview display interface of the application B. In the related technology, a main process of the application B needs to be started to load the preview display interface of the application B. The vertical domain service independent process in embodiments of this application may load a necessary independent resource and does not depend on the main process and a resource of the application. This manner of creating the vertical domain service independent process by the system of the electronic device consumes less power than a manner of starting the main process.

The system of the electronic device starts a vertical domain service independent process of the application B, to start the preview vertical domain service of the application B. After a preview service of the application B is started, the system of the electronic device performs rendering and loading and constructs a graphics node tree based on a preview display interface that has been set, and then mounts a drawn display interface on a graphics node tree corresponding to the vertical domain service control of the application A. Finally, the preview display interface of the application B is displayed in the application A.

In some examples, the preview vertical domain service of the application B may be developed by a developer based on a preview vertical domain service template in a development phase of the application B. That is, the developer may set, based on the preview vertical domain service template, the preview display interface that needs to be loaded.

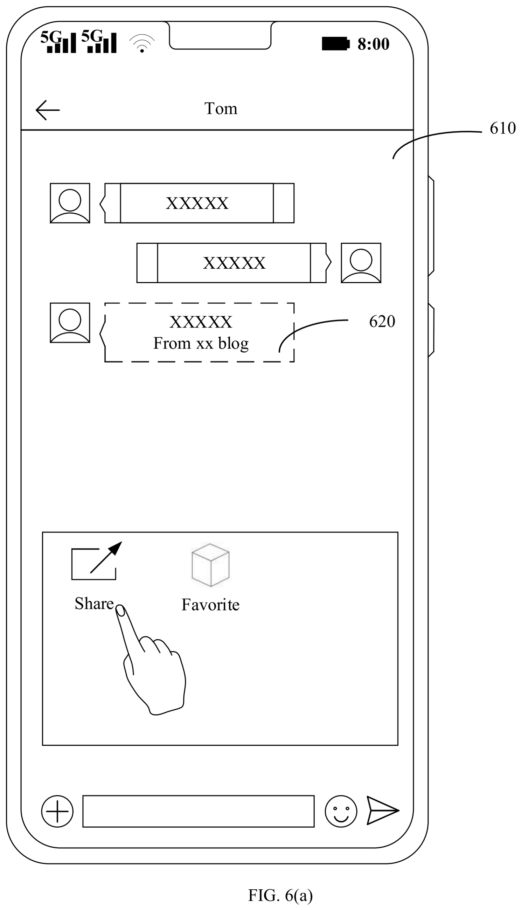

In the example in FIG. 4(a) and FIG. 4(b), the electronic device may perform exact matching on the target application based on the preview operation of the user. If the operation of the user corresponds to a share operation, the electronic device performs fuzzy matching on the target application, and finally determines the target application based on an operation of the user. With reference to a vertical domain service startup procedure in FIG. 5 and a share operation of a user shown in FIG. 6(a) to FIG. 6(d), the following specifically describes another example of cross-application interface display provided in embodiments of this application.

FIG. 6(a) to FIG. 6(d) are a diagram of another example of cross-application interface display according to an embodiment of this application. FIG. 6(a) shows a display interface 610 of an application A. It can be learned from FIG. 6(a) that shared content 620 from an application B is received in the application A. In response to a share operation performed by a user on the shared content of the application B, an electronic device creates a vertical domain service control in the application A. It should be understood that the vertical domain service control is used to display a sharing display interface. After the vertical domain service control is created, the application A sends a first request message to a system of the electronic device. The first request message is used to request a sharing vertical domain service.

After receiving the first request, the system of the electronic device checks security of the first request, and matches a target application based on the first request after the check succeeds. In the example shown in FIG. 6(a) to FIG. 6(d), the user wants to share the shared content of the application B. At least one of a plurality of applications on the electronic device can support a sharing function. In this case, the sharing vertical domain service corresponds to a plurality of target applications.

In a possible implementation, the system of the electronic device may scan configuration files of applications, and detect configuration files in which the sharing function is registered. Then, the electronic device displays, as target applications on the interface, applications for which the sharing function is registered. In other words, target applications based on the share operation include a plurality of applications for which the sharing function is registered.

In some examples, when the sharing vertical domain service corresponds to a plurality of target applications, the electronic device may display application selection boxes corresponding to the plurality of target applications, and a list of applications that support the sharing vertical domain service for selection by the user. After the user selects, based on the plurality of displayed application selection boxes, a target application that the user wants to use, the system of the electronic device creates and starts a vertical domain service independent process corresponding to the target application, to start a sharing vertical domain service of the target application. After the sharing vertical domain service of the target application is started, the system of the electronic device performs interface rendering and loading and constructs a graphics node tree based on a sharing display interface that has been set, and then mounts a drawn display interface on a graphics node tree corresponding to the vertical domain service control of the application A. Finally, the sharing display interface of the target application can be displayed in the application A.

In some examples, the sharing vertical domain service of the target application may be developed by a developer based on a sharing vertical domain template in a development phase of the application. That is, the developer may set, based on the sharing vertical domain service template, the sharing display interface that needs to be loaded.

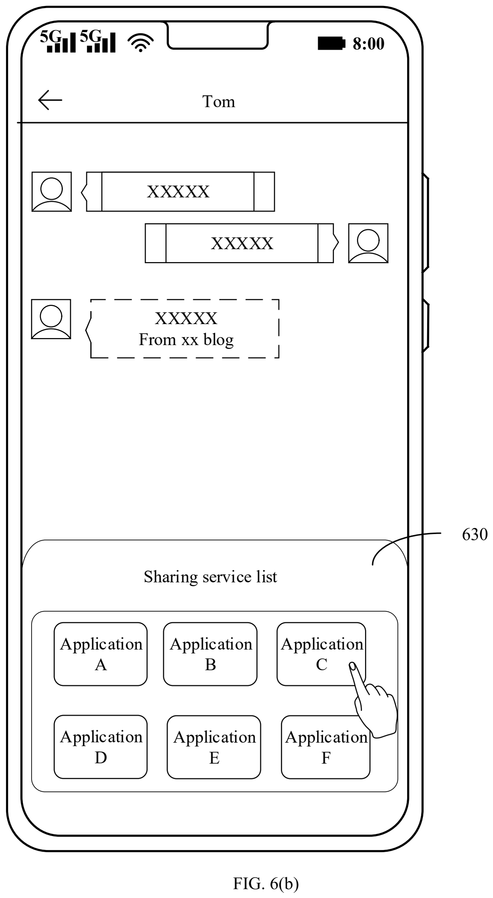

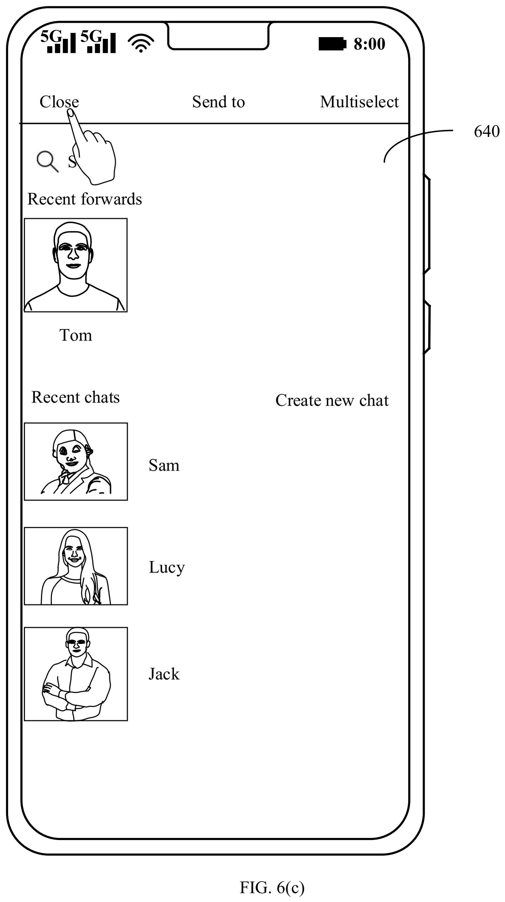

For example, as shown in FIG. 6(b), it is assumed that the sharing function is registered for applications A, B, C, D, E, and F. In this case, the electronic device displays application selection boxes, namely, a sharing service list 630, and displays these applications in the sharing service list 630 for selection by the user. For example, the user may select the application C to perform the share operation. The system of the electronic device creates and starts a vertical domain service independent process of the application C, to start a sharing vertical domain service of the application C. After the sharing vertical domain service of the application C is started, the system of the electronic device performs rendering and loading and constructs a graphics node tree based on a sharing display interface that has been set for the application C, and then mounts a drawn sharing display interface of the application C on the graphics node tree corresponding to the vertical domain service control of the application A. After the user taps a control of the application C on an interface shown in FIG. 6(b), the display interface of the electronic device is switched to an interface shown in FIG. 6(c). In response to the share operation performed by the user on the shared content of the application B, the electronic device may directly display a sharing display interface 640 of the application C in the application A.

It should be understood that the sharing vertical domain service of the application C may be developed by a developer based on a sharing vertical domain service template of the application C in a development phase of the application C. That is, the developer sets, based on the sharing vertical domain service template of the application C, the sharing display interface that needs to be loaded.

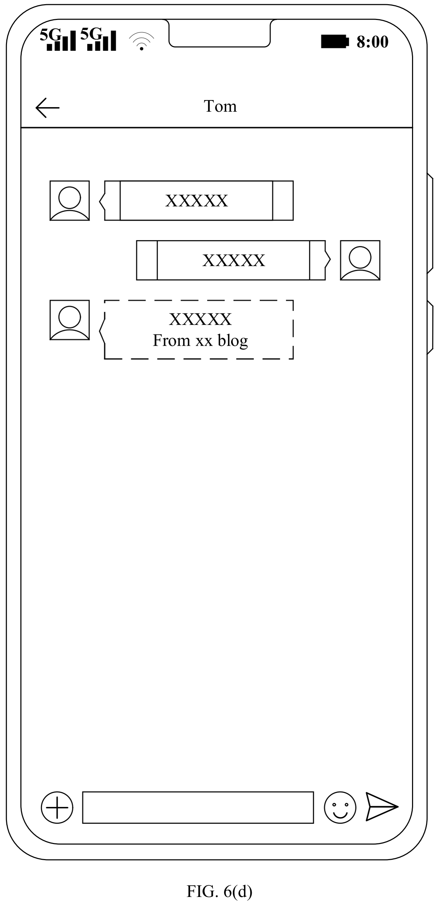

It should be noted that switching from the interface shown in FIG. 6(b) to the interface shown in FIG. 6(c) is displayed in the vertical domain service control created on the interface of the application A, and no cross-application redirection animation is required, to reduce energy consumption of the electronic device. After completing the share operation, the user taps a "Close" control on the interface shown in FIG. 6(c). In this case, the vertical domain service exits from the interface of the application A, and the application A destroys the corresponding vertical domain service control and returns to a main interface of the application A, such as an interface shown in FIG. 6(d). In this way, no cross-application redirection animation is required, to reduce energy consumption of the electronic device.

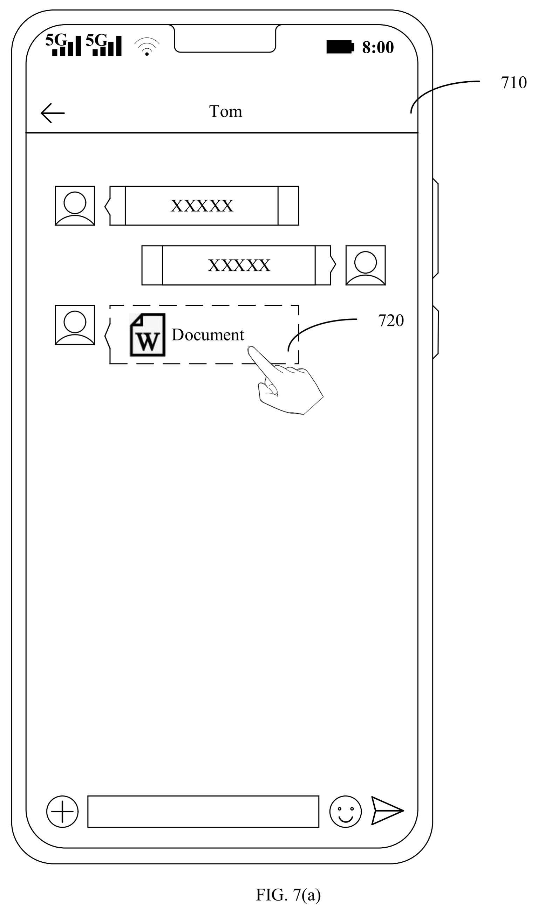

The foregoing examples in FIG. 4(a) and FIG. 4(b) and FIG. 6(a) to FIG. 6(d) are described in detail by using a single-function vertical domain service provided by the electronic device as an example. In embodiments of this application, the electronic device may further create, based on a request of an application, a plurality of vertical domain services related to the application, to improve user experience. With reference to a vertical domain service startup procedure in FIG. 5 and cross-application interface display shown in FIG. 7(a) to FIG. 7(d), the following specifically describes another example of the cross-application interface display method provided in embodiments of this application.

FIG. 7(a) to FIG. 7(d) are a diagram of another example of cross-application interface display according to an embodiment of this application. FIG. 7(a) shows a display interface 710 of an application A. As shown in FIG. 7(a), shared content 720 from an application B is received in the application A. In response to a preview operation performed by a user on the shared content of the application B, a system of an electronic device creates a vertical domain service control in the application A. It should be understood that the vertical domain service control is used to display a display interface of the application B. After the vertical domain service control in the application A is created, the application A sends a first request message to the system of the electronic device. The first request message is used to request a vertical domain service. In the example shown in FIG. 7(a) to FIG. 7(d), the vertical domain service is not limited to a preview vertical domain service. The vertical domain service may be a plurality of vertical domain services related to the application B. For example, if the application B is a document application, the vertical domain service may include document-related preview, editing, sharing, and the like. A specific type of the vertical domain service is not limited in embodiments of this application.

After receiving the first request, the system of the electronic device checks security of the first request, and matches a target application based on the first request after the check succeeds. For example, the target application may be a document application. The electronic device creates and starts a vertical domain service independent process based on a target application selected by the user. The vertical domain service independent process is used to load all vertical domain service templates of the application.

The system of the electronic device creates the vertical domain service independent process, and starts a plurality of vertical domain services of the application B. The system of the electronic device performs rendering and loading and constructs a graphics node tree based on interfaces that have been set, and then mounts a drawn display interface on a graphics node tree corresponding to the vertical domain service control of the application A based on an operation of the user. When the system of the electronic device starts the vertical domain service of the application B in the application A, a display interface corresponding to the vertical domain service of the application B is displayed in the application A.

In some examples, the plurality of vertical domain services of the application B may be developed by a developer based on a plurality of vertical domain service templates in a development phase of the application B. That is, the developer may separately set, based on the plurality of vertical domain service templates, interfaces that need to be loaded.

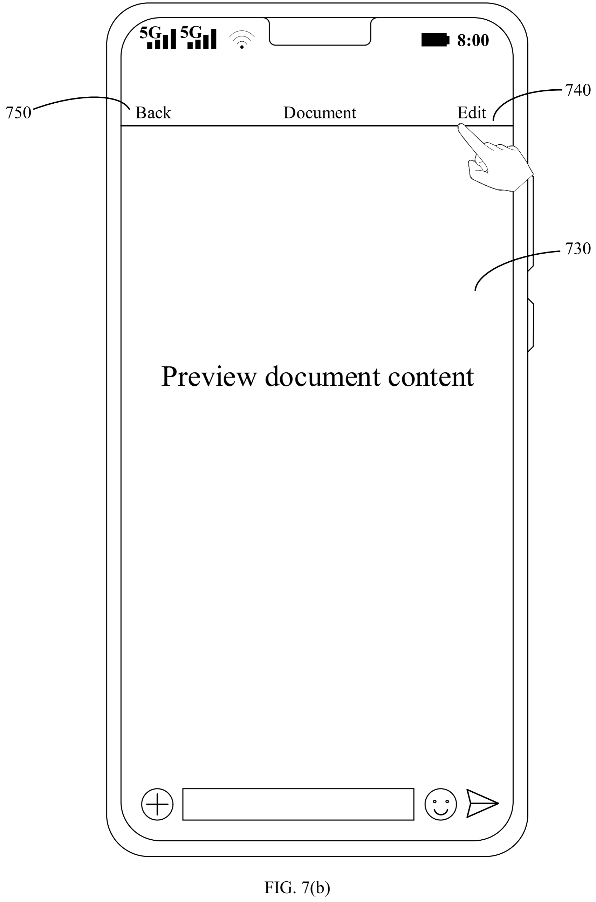

It should be understood that after the user performs the preview operation through tapping, the system of the electronic device mounts a drawn preview interface of the application B on the graphics node tree corresponding to the vertical domain service control of the application A, and finally displays the preview interface. For example, as shown in FIG. 7(a), after the user taps a link of the shared content 720 of the application B, in response to the preview operation (the preview operation may also be understood as an opening operation) of the user, the electronic device switches the display interface of the electronic device from the interface shown in FIG. 7(a) to an interface shown in FIG. 7(b), that is, displays a preview interface 730 of the application B in the application A. It should be understood that the preview interface of the application B is displayed through a vertical domain service template. Therefore, switching from the interface shown in FIG. 7(a) to the interface shown in FIG. 7(b) does not require a redirection between the applications. In comparison with the conventional technology, a plurality of redirections between the applications are avoided, to reduce power consumption of the electronic device and improve user experience.

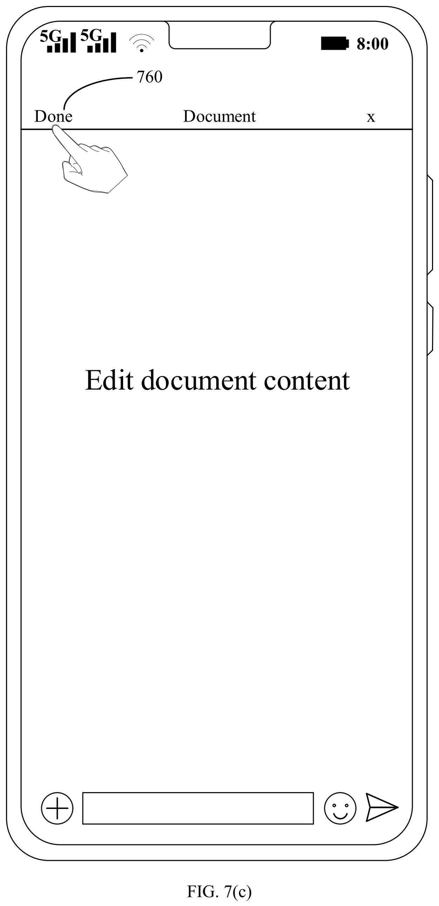

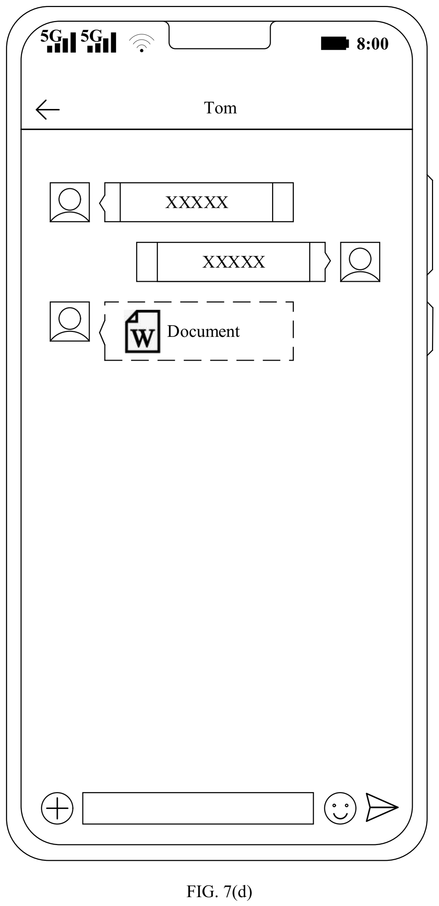

It can be further learned from FIG. 7(b) that the preview display interface 730 includes an "Edit" control 740 and a "Back" control 750. When the user finishes previewing document content and does not need to edit it, the user may tap the "Back" control 750 to exit the preview vertical domain service and return to the interface 710 of the application A. If the user further needs to edit the document after previewing the document content, the user may directly tap the "Edit" control 740, and the system of the electronic device starts and draws an editing interface of the application B, mounts the drawn editing interface on the graphics node tree corresponding to the vertical domain service control of the application A, and finally displays the editing interface. With reference to FIG. 7(a) to FIG. 7(d), after the user taps the "Edit" control 740 in FIG. 7(b), the display interface is switched to an interface shown in FIG. 7(c). That is, the preview vertical domain service is switched to the editing vertical domain service. After completing editing on the interface shown in FIG. 7(c), the user taps a "Done" control 760 to exit the editing vertical domain service, destroy the corresponding vertical domain service control, and return to the display interface 710 of the application A, as shown in FIG. 7(d).

It can be learned that based on the example in FIG. 7(a) to FIG. 7(d), the electronic device may provide a plurality of vertical domain services based on a request of the user, so that the user can preferentially use the preview vertical domain service to browse the document content without redirecting from the application A. If editing is further needed, the preview vertical domain service is switched to the editing vertical domain service, to improve user experience and office efficiency.

In the examples in FIG. 4(a) and FIG. 4(b), FIG. 6(a) to FIG. 6(d), and FIG. 7(a) to FIG. 7(d), the method provided in embodiments of this application is applicable to a scenario in which the application A is a system application or a third-party application. Correspondingly, the application B may also be a system application or a third-party application. For example, user experience is improved by combining a system application and a vertical domain service template. For example, the system application may be Celia Suggestions, and the vertical domain service template may be a ride-hailing vertical domain service template.

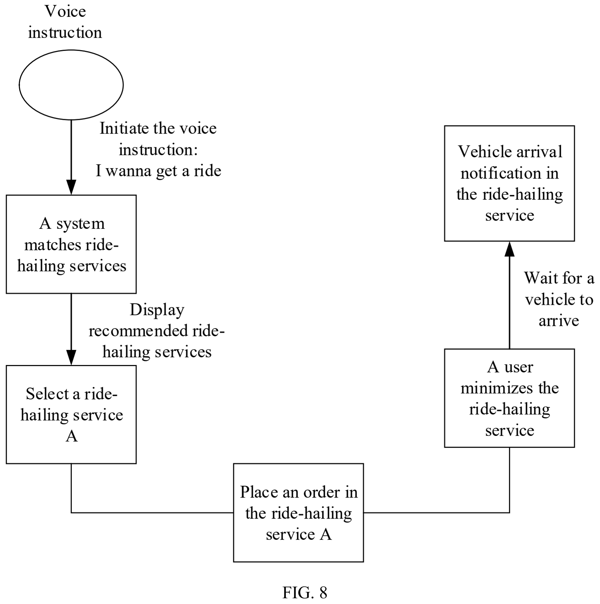

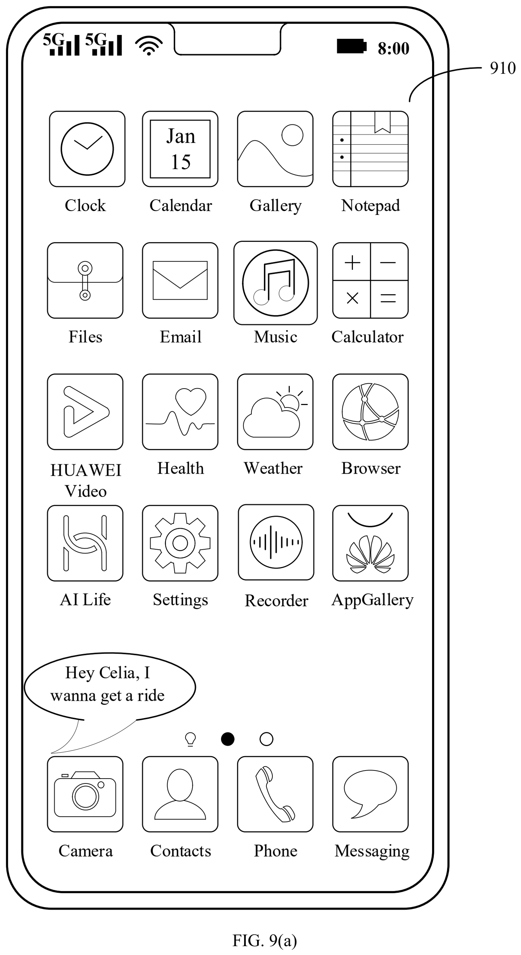

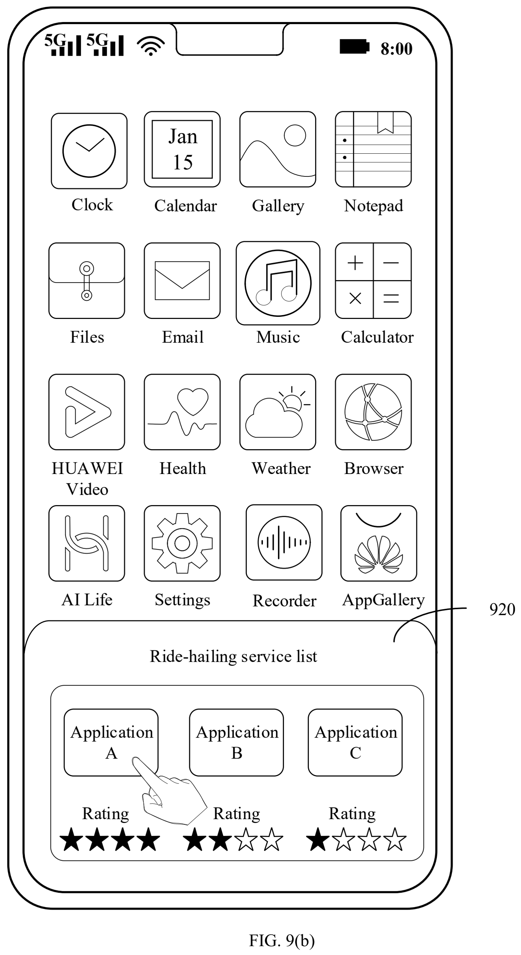

With reference to FIG. 8 and FIG. 9(a) to FIG. 9(d), the following describes another example of the cross-application interface display method provided in embodiments of this application. FIG. 8 is a schematic flowchart of a voice-activated ride-hailing service according to an embodiment of this application. FIG. 9(a) to FIG. 9(d) are a diagram of another example of cross-application interface display according to an embodiment of this application. As shown in FIG. 8, after the user sends a voice instruction "Hey Celia, I wanna get a ride", a system of an electronic device matches a target application based on the voice instruction for ride-hailing. FIG. 9(a) shows a desktop interface 910 of the electronic device. After the user sends the voice instruction "Hey Celia, I wanna get a ride", a "Celia Suggestions" application on the electronic device creates a vertical domain service control. The vertical domain service control is used to display a ride-hailing display interface. After the vertical domain service control is created, the system of the electronic device matches a plurality of target applications. As shown in FIG. 9(b), a ride-hailing service list 920 includes the following target applications: an application A, an application B, and an application C. It should be understood that a ride-hailing service is registered for the application A, the application B, and the application C.

Because the vertical domain service corresponds to a plurality of target applications, the electronic device displays application selection boxes corresponding to the plurality of target applications, and a list of applications that support the vertical domain service for selection by the user. After the user selects, based on the plurality of displayed application selection boxes, a target application that the user wants to use, the system of the electronic device creates and starts a vertical domain service independent process of the target application, to start a vertical domain service of the target application. The system of the electronic device performs interface rendering and loading and constructs a graphics node tree based on a ride-hailing display interface that has been set, and then mounts a constructed display interface on a graphics node tree corresponding to the vertical domain service control. When the system of the electronic device starts a ride-hailing vertical domain service of the target application, the ride-hailing display interface of the target application can be displayed in the electronic device.

In some examples, the ride-hailing vertical domain service of the target application may be developed by a developer based on a ride-hailing vertical domain template in a development phase of the application. That is, the developer may set, based on the ride-hailing vertical domain service template, the ride-hailing display interface that needs to be loaded.

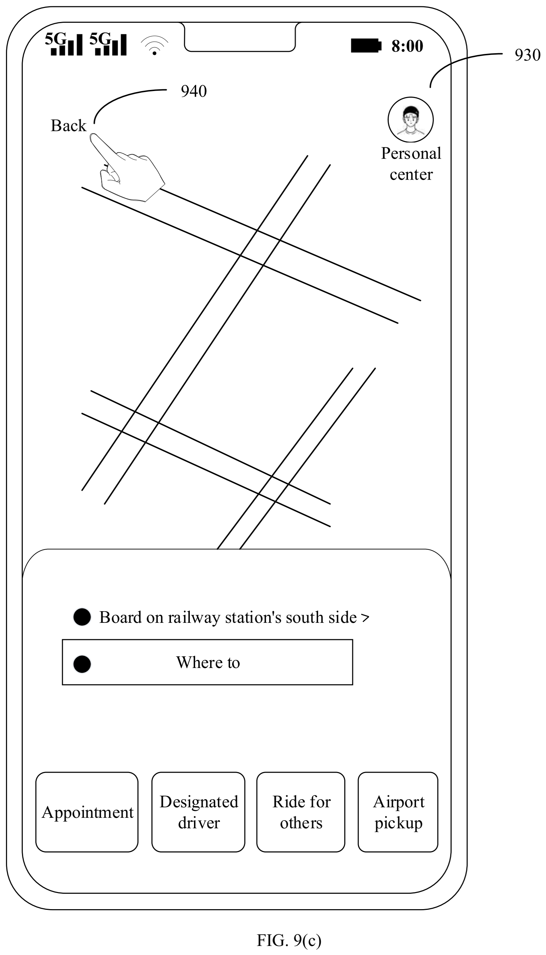

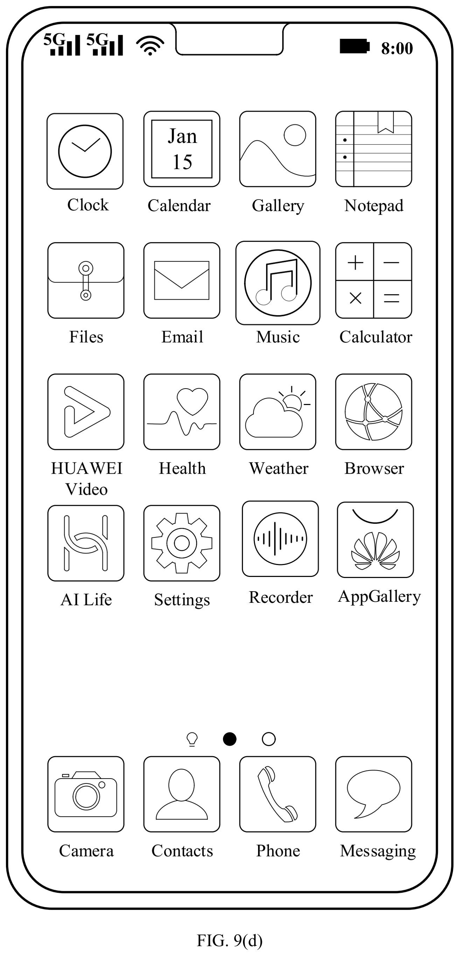

For example, as shown in FIG. 9(b), after the user selects the ride-hailing application A, the system of the electronic device creates a vertical domain service independent process of the application A, to start a ride-hailing vertical domain service of the application A. After the ride-hailing vertical domain service of the application A is started, the system of the electronic device draws a ride-hailing display interface based on a ride-hailing display interface that has been set for the application A, and then mounts the drawn ride-hailing display interface on a graphics node tree of the "Celia Suggestions" application for display. Finally, the ride-hailing display interface of the application A is displayed on the electronic device. After the user selects the ride-hailing application A, the display interface is switched from an interface shown in FIG. 9(b) to an interface shown in FIG. 9(c). The electronic device can directly display a ride-hailing display interface 930 of the application A in the Celia Suggestions. The user may enter a destination on the interface shown in FIG. 9(c), and then place an order for ride-hailing on the interface shown in FIG. 9(c) in the application A. The user may tap a "Back" control 940, and the display interface is switched to an interface shown in FIG. 9(d). In other words, the user may exit or minimize the ride-hailing service, and return to a home screen of the electronic device or perform an operation in another application. There is no need to remain in the ride-hailing service. After a vehicle arrives, the electronic device displays an arrival notification.

In some examples, the ride-hailing vertical domain service of the application A may be developed by a developer based on a ride-hailing vertical domain template in a development phase of the application A. That is, the developer may set, based on the ride-hailing vertical domain service template, the ride-hailing display interface that needs to be loaded.

It can be learned that in the example shown in FIG. 9(a) to FIG. 9(d), the user combines a system application (Celia Suggestions) with the ride-hailing vertical domain service. The user quickly experiences the ride-hailing service without starting a main process of the ride-hailing application, to reduce power consumption of the electronic device. In addition, a current operation of the user on the display interface is not affected, to improve user experience.

In the foregoing examples in FIG. 4(a) and FIG. 4(b), FIG. 6(a) to FIG. 6(d), FIG. 7(a) to FIG. 7(d), and FIG. 9(a) to FIG. 9(d), an example in which a service consumer is one application is used for description. In embodiments of this application, a consumer of a same service may alternatively be a plurality of applications. When the service consumer is a plurality of applications, the plurality of applications each send a first request to the system of the electronic device to request a vertical domain service. The system of the electronic device creates a plurality of window instances in a vertical domain service template based on the plurality of first requests. A vertical domain service provider separately sets display interfaces based on the plurality of window instances, to ensure that each vertical domain service control corresponds to one window and displays its own interface without affecting each other's interaction. It should be understood that the service consumer is an application (for example, the application A in the example in FIG. 4(a) and FIG. 4(b) being used by the user, and the vertical domain service provider is an application (for example, the application B in the example in FIG. 4(a) and FIG. 4(b) that provides the service.

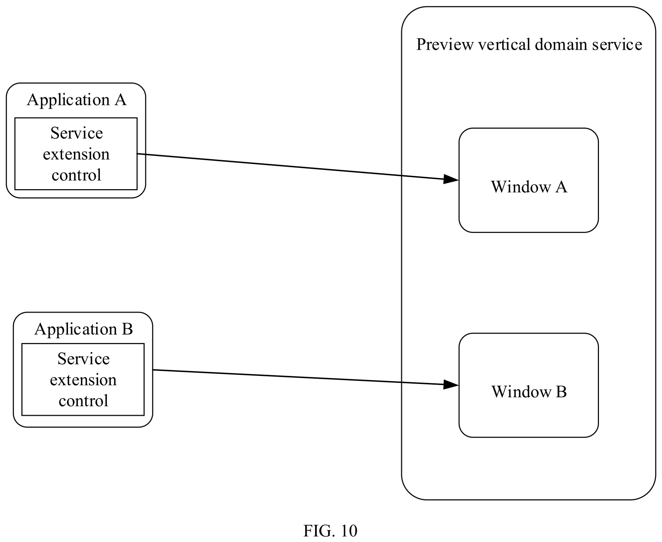

For example, FIG. 10 is a diagram of a plurality of window instances corresponding to a vertical domain service template according to an embodiment of this application. As shown in FIG. 10, it is assumed that an application A and an application B request a vertical domain service preview from a system of an electronic device. The system of the electronic device creates a vertical domain service independent process, to start a preview vertical domain service of an application C. The application C sets, based on the requests of the application A and the application B, an interface displayed in the application A and in a window A, and an interface displayed in the application B and in a window B. Finally, the system of the electronic device separately performs rendering and loading based on the window A and the window B that are set by the application C, and then mounts a rendered interface corresponding to the window A to a vertical domain service control of the application A, to display the interface in the application A, and mounts a rendered interface corresponding to the window B to a vertical domain service control of the application B, to display the interface in the application B.

In some embodiments, when the service consumer is a plurality of applications, a state of the vertical domain service independent process is switched based on process states of the plurality of applications. When the plurality of applications are all in a background state, the vertical domain service independent process is switched to the background state. For example, with continued reference to FIG. 10, when both the application A and the application B are run in a background, the vertical domain service independent process of the application C is run in the background. When at least one of the plurality of applications is in a foreground state, although the other applications are in the background state, the vertical domain service independent process is still in the foreground state. For example, when the application A or the application B is displayed in a foreground, the vertical domain service independent process of the application C is run in the background.

With reference to the foregoing diagrams of interface display, the following describes in detail an example of the cross-application interface display method provided in embodiments of this application.

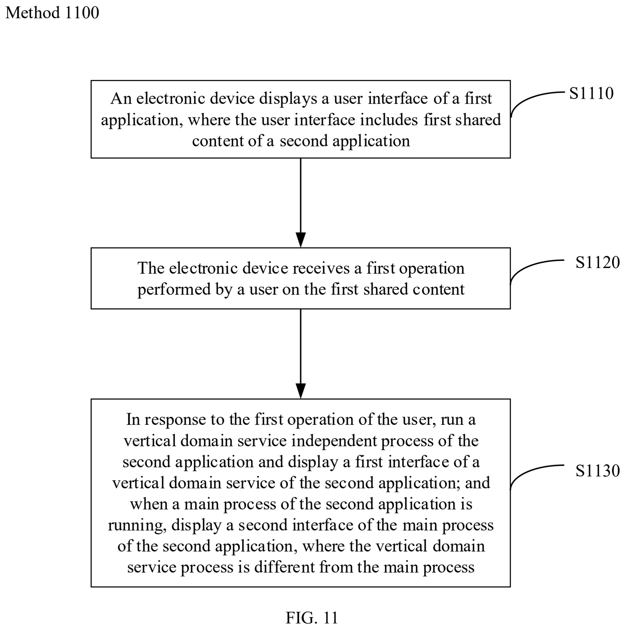

FIG. 11 is a schematic flowchart of a cross-application interface display method 1100 according to an embodiment of this application. As shown in FIG. 11, the method 1100 shown in FIG. 11 may include steps S1110 to S1130. The following describes in detail the steps in the method 1100 with reference to FIG. 11.

It should be understood that in embodiments of this application, the method 1100 is described by using an example in which the method 1100 is performed by an electronic device. As an example rather than a limitation, the method 1100 may alternatively be performed by a chip used in the electronic device.

S1110: The electronic device displays a user interface of a first application. The user interface includes first shared content of a second application.

It should be noted that the application in embodiments of this application is application software. The first application or the second application may be a system application or a third-party application running on a terminal. For example, the first application may be application software (for example, Celia Suggestions) provided by a system, or may be application software (a social application, a shopping application, a ride-hailing application, or the like) downloaded and installed by a user. This is not limited in this application.

The user interface is an interface for interaction between the first application and a user. The user may perform a series of operations on the user interface. Correspondingly, the electronic device receives an instruction of a first operation of the user through the user interface, determines an operation intention corresponding to the first operation based on the first operation, and finally responds to the operation of the user based on the operation intention.

It should be further noted that the application in this application may be a world wide web (world wide web, Web) application, or may be a native application. The web application is a web application running in a browser. The native application is an application that can directly run on a current operating system. The web application includes but is not limited to a ticket purchase application, a message board, and a forum that run in a browser. The native application includes but is not limited to a music application, a shopping application, a graphics editing application, and a sports application.

In embodiments of this application, the first shared content of the second application included on the user interface of the first application may be a link related to the shared content, generated in the second application, and sent to the first application. Alternatively, the first shared content of the second application may be a QR code generated in the second application and sent to the first application. Certainly, the first shared content of the second application may alternatively be in another form. This is not limited in embodiments of this application.

For example, as shown in FIG. 4(a), both the first application and the second application are social applications (third-party applications) being used by the user, and the first shared content of the second application is sent in a form of a link.

For another example, as shown in FIG. 6(a), both the first application and the second application are social applications being used, and the shared content of the second application is sent in a form of a link.

For another example, as shown in FIG. 7(a), the first application is a social application (a third-party application) being used by the user, the second application is an office application (a third-party application), and the first shared content of the second application is sent in a form of a link.

For another example, as shown in FIG. 9(a), the first application is an application (Celia Suggestions) provided by the system, and the second application is a ride-hailing application.

S1120: The electronic device receives a first operation performed by a user on the first shared content.

In some examples, the first operation performed by the user on the first shared content of the second application on the user interface of the first application may be understood as follows: When using the first application, the user receives the first shared content from the second application, and performs a preview operation, a share operation, an edit operation, or the like on the first shared content on the user interface of the first application.

It should be noted that the first shared content of the second application may be a message sent by another user, or may be a message sent by the user between the first application and the second application on the same electronic device being used.

For example, as shown in FIG. 4(a) and FIG. 7(a), the first operation of the user is the preview operation (an opening operation) of the user.

For another example, as shown in FIG. 6(a), the first operation of the user is the share operation of the user.

For another example, as shown in FIG. 9(a), the first operation of the user is a voice operation ("Hey Celia, I wanna get a ride").

S1130: In response to the first operation of the user, run a vertical domain service independent process of the second application and display a first interface of a vertical domain service of the second application; and when a main process of the second application is running, display a second interface of the main process of the second application, where the vertical domain service process is different from the main process.

After receiving the first operation performed by the user on the first shared content of the second application in the first application, the electronic device runs the vertical domain service process of the second application and displays the first interface of the vertical domain service of the second application in the first application in response to the first operation without starting the main process of the second application. This can reduce power consumption of the electronic device and improve user experience.

In embodiments of this application, the first interface of the vertical domain service of the second application may be displayed in at least one of a full-screen mode, a floating window mode, or a control embedding mode. Alternatively, the vertical domain service may display the interface in a full-modal mode, a semi-modal mode, or the like. Alternatively, the first interface may be displayed in another mode. This is not limited in embodiments of this application.

For example, as shown in FIG. 4(a), after responding to the preview operation performed by the user on the first shared content of the second application in the first application, the electronic device displays a preview display interface of the second application in the first application, as shown in FIG. 4(b). The preview display interface is the first interface. It should be noted that if the preview operation is performed by tapping the content when the main process of the second application is running, the electronic device displays a second interface of the main process of the second application. A display interface (the second interface) in the second application may be the same as or different from a display interface (the first interface) in the first application.

For another example, as shown in FIG. 7(a), after responding to the preview operation performed by the user on the first shared content of the second application in the first application, the electronic device displays a preview display interface of the second application in the first application, as shown in FIG. 7(b). The preview display interface is the first interface. It should be noted that if the preview operation is performed by tapping the document when the main process of the second application is running, the electronic device displays a second interface of the main process of the second application. A display interface (the second interface) in the second application may be the same as or different from a display interface (the first interface) shown in FIG. 7(b).

For another example, as shown in FIG. 9(a), after responding to the voice operation performed by the user on the second application (ride-hailing application) in the first application (Celia Suggestions), the electronic device displays a ride-hailing display interface of the second application in the first application, as shown in FIG. 9(c). The ride-hailing display interface is the first interface. It should be noted that if the user performs a ride-hailing operation when the electronic device is running the main process of the second application, the electronic device displays a ride-hailing display interface of the main process of the second application. The ride-hailing display interface (the second interface) may be the same as or different from a display interface shown in FIG. 9(c).

For a specific process of running the vertical domain service independent process of the second application and displaying the first interface of the vertical domain service of the second application in response to the first operation of the user in step S1130, refer to the foregoing descriptions in FIG. 4(a) to FIG. 9(d). Details are not described herein again.

In the method provided in embodiments of this application, after the electronic device receives the first operation performed by the user on the shared content of the second application on the user interface of the first application, the electronic device runs the vertical domain service independent process of the second application in the first application to display the first interface provided by the vertical domain service of the second application. The first interface can be displayed without starting the main process of the second application. The method enables the user to quickly use, in the first application without starting the main process of the second application, a service (for example, preview or sharing) provided by the second application. This avoids a long interaction path, cumbersome operations, and power waste of the electronic device that are caused by starting the main process of the second application, to improve user experience.

In some possible implementations, running the vertical domain service independent process of the second application includes: creating the vertical domain service independent process, where the vertical domain service independent process is used to run the vertical domain service of the second application, and the vertical domain service is used to represent an interface displayed when the second application is run in response to the first operation; when the vertical domain service is started, drawing the first interface based on the vertical domain service; and loading the first interface into the first application.

In this implementation, the electronic device creates the vertical domain service independent process for the second application based on the first operation of the user. The vertical domain service independent process may load an independent resource required by the application, and does not depend on the main process and a resource of the second application. In this way, the electronic device can have low power consumption. After the vertical domain service is started, the first interface is drawn based on the vertical domain service. Then, the first interface is loaded into the first application. In this way, the interface that has been set for the second application can be displayed in the first application. For a process of displaying the first interface in this implementation, refer to the foregoing descriptions in FIG. 4(a) to FIG. 9(d). Details are not described herein again.

For example, as shown in FIG. 4(a) and FIG. 4(b), in response to the preview operation of the user, the electronic device creates the vertical domain service independent process of the second application. The vertical domain service independent process is used to run a preview vertical domain service of the second application. When the preview vertical domain service is started, the electronic device draws a preview display interface (the first interface) based on the preview vertical domain service that has been set, and finally loads the preview display interface into the first application.

It should be noted that the preview vertical domain service of the first application may be developed by a developer based on a vertical domain service template in a development phase of the application. It may also be understood that the developer may set, based on a preview vertical domain service template, the preview display interface that needs to be loaded.

In some possible implementations, before displaying the first interface of the vertical domain service of the second application, the method further includes: determining a vertical domain service control in the first application, where the vertical domain service control is used to limit a display region of the first interface; and displaying the first interface in the vertical domain service control.

In this implementation, the electronic device creates the vertical domain service control in the first application and displays the first interface in the vertical domain service control. The vertical domain service control can determine a display position or the display region of the first interface.

For example, as shown in FIG. 4(a) and FIG. 4(b), the electronic device creates the vertical domain service control 440 in the first application, and finally displays the loaded preview display interface 430 in the vertical domain service control 440. With reference to FIG. 4(a) and FIG. 4(b), it can be learned that the vertical domain service control 440 can determine a display position and a display region of the preview display interface 430.

In some possible implementations, the first application corresponds to a graphics node tree. The graphics node tree includes a graphics node tree identifier. The graphics node tree identifier includes an identifier of the vertical domain service control. Loading the first interface into the first application includes: mounting a node of the first interface on the graphics node tree of the first application based on the identifier of the vertical domain service control, and loading the first interface into the first application based on the graphics node tree on which the node of the first interface is mounted.

In this implementation, a mounting position of the first interface of the second application on the interface of the first application can be determined through the identifier of the vertical domain service control on the graphics node tree.

In some possible implementations, the vertical domain service independent process may run a first vertical domain service and a second vertical domain service. The first vertical domain service includes a control corresponding to the second vertical domain service. The first vertical domain service is different from the second vertical domain service.

It should be understood that the first vertical domain service and the second vertical domain service are run in the same vertical domain service independent process.

In this implementation, the vertical domain service independent process may load a plurality of vertical domain services. The first vertical domain service in the plurality of vertical domain services includes the control corresponding to the second vertical domain service. When using the first vertical domain service, the user can quickly switch to the second vertical domain service as needed, to improve user experience.

For example, with reference to FIG. 7(b), the first vertical domain service is a preview vertical domain service, the second vertical domain service is an editing vertical domain service, and the preview vertical domain service includes a control of the editing vertical domain service, for example, the interface shown in FIG. 7(b). When the preview vertical domain service includes the control of the editing vertical domain service, a preview display interface includes an "Edit" control. When editing is needed, the user directly taps an "Edit" button on the preview display interface, and the display interface of the electronic device is switched to the interface shown in FIG. 7(c), to quickly switch between vertical domain service templates in the application.

In some possible implementations, the method further includes: displaying a user interface of a third application, where the user interface of the third application includes second shared content of the second application; receiving a second operation performed by the user on the second shared content of the second application; and in response to the second operation on the second shared content, running a vertical domain service independent process of the second application and displaying a third interface of a vertical domain service of the second application. The vertical domain service of the second application includes a display window of the third application. The display window of the third application is different from a display window of the first application.

It should be noted that the first operation and the second operation may be operations of a same type, for example, both may be opening operations on the shared content.

In this implementation, when both the first application and the second application start the vertical domain service independent process of the second application, the electronic device creates a plurality of window instances in the vertical domain service provided by the second application, and separately sets the first interface based on the plurality of window instances, to ensure that each vertical domain service control corresponds to one window and displays its own interface without affecting each other's interaction.

It should be noted that the vertical domain service independent process that is of the second application and that is started by the third application and the vertical domain service independent process that is of the second application and that is started by the first application are a same vertical domain service independent process. The vertical domain service provided for the first application or the third application when the vertical domain service independent process of the second application is run is related to an operation of the user.

For example, as shown in FIG. 10, the first application is an application A, the third application is an application B, and the application B includes the second shared content of the second application. After the electronic device receives a preview operation performed by the user on the second shared content of the second application, the electronic device runs the vertical domain service independent process of the second application and displays an interface of the preview vertical domain service of the second application in response to the preview operation. The preview vertical domain service includes the display window of the third application. When the application A also starts the preview vertical domain service of the second application, the preview vertical domain service also includes the display window of the first application. To avoid display confusion, the display window of the third application is different from the display window of the first application.

It should be further noted that the application A starts the preview vertical domain service of the second application, the application B also starts the preview vertical domain service of the second application, and a vertical domain service independent process corresponding to the preview vertical domain service of the second application started by the application A and a vertical domain service independent process corresponding to the preview vertical domain service of the second application started by the application B are a same process.

In some possible implementations, the vertical domain service independent process of the second application is run in a foreground when at least one of the first application and the third application is run in the foreground.

For example, as shown in FIG. 10, the independent process of the preview vertical domain service is run in the foreground when the application A or the application B is run in the foreground or both the application A and the application B are run in the foreground. When the application A is displayed in the foreground, the preview display interface is displayed in the foreground. When the application A is displayed in a background, the preview display interface is run in the background. Similarly, when the application B is displayed in the foreground, the preview display interface is displayed in the foreground. When the application B is displayed in the background, the preview display interface is run in the background.

In a possible implementation of the first aspect, the vertical domain service independent process of the second application is run in the background when both the first application and the third application are run in the background.

For example, as shown in FIG. 10, the independent process of the preview vertical domain service is run in the background when the application A and the application B are run in the background.

In the foregoing method, the vertical domain service provided by the second application is specifically described. With reference to the foregoing diagrams of interface display, the following describes another example of the cross-application interface display method provided in embodiments of this application.

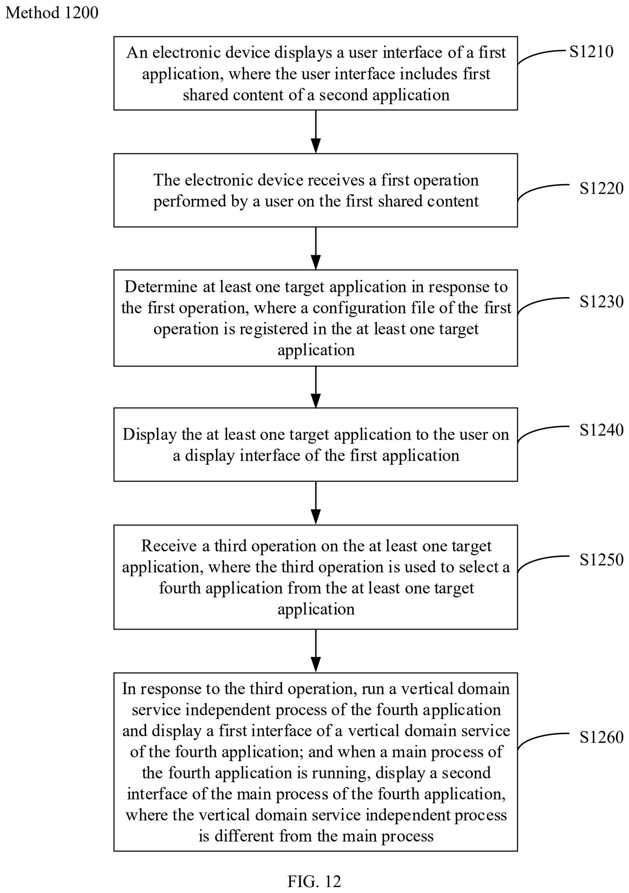

FIG. 12 is a schematic flowchart of an example of another cross-application interface display method 1200 according to an embodiment of this application. As shown in FIG. 12, the method 1200 shown in FIG. 12 may include steps S1210 to S1260. The following describes in detail the steps in the method 1200 with reference to FIG. 12.

It should be understood that in embodiments of this application, the method 1200 is described by using an example in which the method 1200 is performed by an electronic device. As an example rather than a limitation, the method 1200 may alternatively be performed by a chip used in the electronic device.

S1210: The electronic device displays a user interface of a first application. The user interface includes first shared content of a second application.

S1220: The electronic device receives a first operation performed by a user on the first shared content.

For descriptions of steps S1210 and S1220, refer to step S1110 and step S1120. Details are not described herein again.

S1230: The electronic device determines at least one target application in response to the first operation. A configuration file of the first operation is registered in the at least one target application.

S1240: Display the at least one target application to the user on a display interface of the first application.

S1250: Receive a third operation on the at least one target application. The third operation is used to select a fourth application from the at least one target application.

In embodiments of this application, the electronic device may determine at least one target application corresponding to the first operation based on the first operation of the user, that is, the configuration file of the first operation is registered in each of the at least one target application. The electronic device may display application selection boxes of a plurality of target applications to the user for selection by the user.

For example, as shown in FIG. 6(a), after the electronic device responds to a share operation performed by the user on the first shared content of the second application in the first application, the electronic device determines a plurality of target applications corresponding to the operation based on the share operation. As shown in FIG. 6(b), the plurality of target applications include an application A, an application B, an application C, an application D, an application E, and an application F. The user may select one of the plurality of target applications to perform the share operation. The third operation is an operation of selecting an application for sharing from the application A, the application B, the application C, the application D, the application E, and the application F. As shown in FIG. 6(b), the third operation is an operation of tapping the application C by the user.

S1260: In response to the third operation, run a vertical domain service independent process of the fourth application and display a first interface of a vertical domain service of the fourth application; and when a main process of the fourth application is running, display a second interface of the main process of the fourth application. The vertical domain service independent process is different from the main process.

The electronic device runs the vertical domain service process of the fourth application and displays the first interface of the vertical domain service of the fourth application in the first application in response to the third operation without starting the main process of the fourth application. This can reduce power consumption of the electronic device and improve user experience.

For example, as shown in FIG. 6(b), the user selects the application C for sharing. After receiving the third operation of tapping the application C by the user, the electronic device displays a sharing display interface of the application C (the fourth application) in the first application, as shown in FIG. 6(c). The sharing display interface is the first interface. It should be noted that if the share operation is performed by tapping the content when the electronic device is running the fourth application, a display interface (the second interface) in the fourth application may be the same as or different from a display interface (the first interface) shown in FIG. 6(c).

In the another example of the cross-application interface display method provided in embodiments of this application, after the electronic device receives the first operation performed by the user on the shared content of the second application on the user interface of the first application, the electronic device may determine a plurality of target applications corresponding to the first operation. Then, the electronic device may display application selection boxes of the plurality of target applications to the user for selection by the user. Finally, the electronic device runs the vertical domain service independent process of the fourth application in the first application based on a requirement of the user to display the first interface provided by the vertical domain service of the fourth application. The first interface can be displayed without starting the main process of the fourth application. The method enables the user to quickly use, in the first application without starting the main process of the fourth application, a service (for example, a sharing service) provided by the fourth application. This avoids a long interaction path, cumbersome operations, and power waste of the electronic device that are caused by starting the main process of the fourth application, to improve user experience.

The foregoing describes in detail examples of the cross-application interface display method provided in this application. It may be understood that to implement the foregoing functions, the electronic device includes a corresponding hardware structure and/or software module for performing each of the functions. A person skilled in the art should be easily aware that in combination with units and algorithm steps in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the cross-application interface display method may be divided into functional units based on the foregoing method examples. For example, each function may be divided into functional units, or two or more functions may be integrated into one unit. The integrated unit may be implemented in a form of hardware, or may be implemented in a form of a software functional unit. It should be noted that in this application, division into the units is an example, and is merely logical function division. During actual implementation, another division manner may be used.

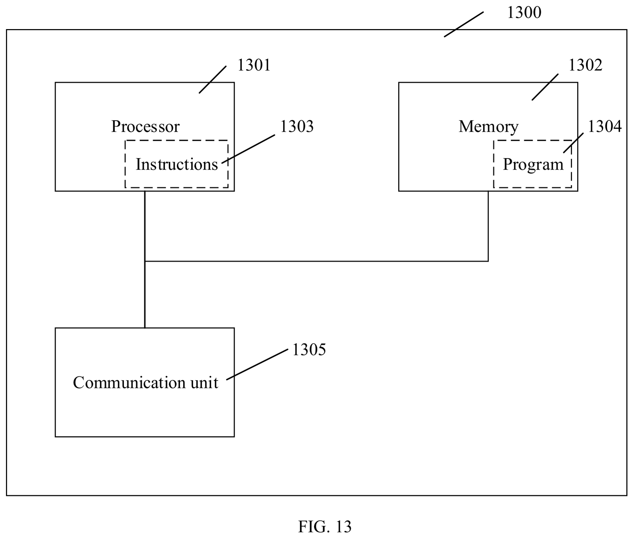

FIG. 13 is a diagram of a structure of an electronic device according to this application. A dashed line in FIG. 13 indicates that a unit or a module is optional. An electronic device 1300 may be configured to implement the methods described in the foregoing method embodiments. The electronic device 1300 may be a terminal device or a server, or may be a module (for example, a processor, a chip, or a chip system) used in the terminal device or the server, or a logical node, a logical module, or software that can implement all or some terminal functions, or a logical node, a logical module, or software that can implement all or some server functions.

The electronic device 1300 includes one or more processors 1301. The one or more processors 1301 may support the electronic device 1300 in implementing the methods in the method embodiments corresponding to FIG. 11 and FIG. 12. The processor 1301 may be a general-purpose processor, a dedicated processor, or the like. For example, the processor 1301 may be a central processing unit (Central Processing Unit, CPU). The CPU may be configured to: control the electronic device 1300, execute a software program, and process data of the software program. The electronic device 1300 may further include a communication unit 1305, configured to implement signal input (receiving) and output (sending).

The electronic device 1300 may be a chip (system). The chip (system) includes a memory and a processor. The processor is configured to execute a computer program stored in the memory, to implement the methods shown in the foregoing embodiments.

The communication unit 1305 may be an input and/or output circuit of the chip (system), or the communication unit 1305 may be a communication interface of the chip (system). The chip (system) may be used as a component of the electronic device 1300.

For another example, the communication unit 1305 may be a transceiver of the electronic device 1300, or the communication unit 1305 may be a transceiver circuit of the electronic device 1300.

The electronic device 1300 may include one or more memories 1302, which store a program 1304. The program 1304 may be run by the processor 1301 to generate instructions 1303, to enable the processor 1301 to perform, based on the instructions 1303, the methods described in the foregoing method embodiments. Optionally, the memory 1302 may further store data. Optionally, the processor 1301 may further read the data stored in the memory 1302. The data and the program 1304 may be stored in a same storage address, or the data and the program 1304 may be stored in different storage addresses.

The processor 1301 and the memory 1302 may be disposed separately, or may be integrated together, for example, integrated on a system on chip (System On Chip, SOC) of the electronic device.

For a specific manner in which the processor 1301 performs the cross-application interface display method, refer to related descriptions in the method embodiments.

It should be understood that the steps in the foregoing method embodiments may be completed by using a logic circuit in a form of hardware or instructions in a form of software in the processor 1301. The processor 1301 may be a CPU, a digital signal processor (Digital Signal Processor, DSP), a field programmable gate array (Field Programmable Gate Array, FPGA), or another programmable logic device, for example, a discrete gate, a transistor logic device, or a discrete hardware component.

This application further provides a computer program product. When the computer program product is executed by the processor 1301, the method in any method embodiment of this application is implemented.

The computer program product may be stored in the memory 1302. For example, the computer program product is the program 1304. The program 1304 is finally converted into an executable object file that can be executed by the processor 1301 after preprocessing, compilation, assembly, linking, and other processes.

This application further provides a computer-readable storage medium, storing a computer program. When the computer program is executed by a computer, the method in any method embodiment of this application is implemented. The computer program may be a high-level language program, or may be an executable object program.

The computer-readable storage medium is, for example, the memory 1302. The memory 1302 may be a volatile memory or a non-volatile memory, or the memory 1302 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (SynchLink DRAM, SLDRAM), and a direct rambus random access memory (Direct Rambus RAM, DRRAM).

It may be clearly understood by a person skilled in the art that, for ease and brevity of description, for a specific working process and generated technical effect of the foregoing apparatus and device, refer to a corresponding process and technical effect in the foregoing method embodiments, and details are not described herein again.

In the several embodiments provided in this application, the disclosed systems, apparatuses, and methods may be implemented in other manners. For example, some features of the method embodiments described above may be ignored or not performed. The described apparatus embodiments are merely examples. Division into the units is merely logical function division and may be other division during actual implementation. A plurality of units or components may be combined or integrated into another system. In addition, coupling between the units or coupling between the components may be direct coupling or indirect coupling, and the coupling may include an electrical connection, a mechanical connection, or another form of connection.

The foregoing embodiments are merely used to describe the technical solutions of this application, but are not intended to limit the technical solutions. Although this application is described in detail with reference to the foregoing embodiments, a person of ordinary skill in the art should understand that they may still make modifications to the technical solutions described in the foregoing embodiments or make equivalent replacements to some technical features thereof. These modifications or replacements do not depart from the spirit and scope of the technical solutions of embodiments of this application, and shall fall within the protection scope of this application.

Finally, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A cross-application interface display method, applied to an electronic device, wherein the method comprises:
displaying a user interface of a first application, wherein the user interface comprises first shared content of a second application;
receiving a first operation performed by a user on the first shared content; and
in response to the first operation, running a vertical domain service independent process of the second application and displaying a first interface of a vertical domain service of the second application; and when a main process of the second application is running, displaying a second interface of the main process of the second application, wherein the vertical domain service independent process is different from the main process.

2. The method according to claim 1, wherein running the vertical domain service independent process of the second application comprises:
creating the vertical domain service independent process, wherein the vertical domain service independent process is used to run the vertical domain service of the second application, and the vertical domain service is used to represent an interface displayed when the second application is run in response to the first operation;
when the vertical domain service is started, drawing the first interface based on the vertical domain service; and
loading the first interface into the first application.

3. The method according to claim 2, wherein before displaying the first interface of the vertical domain service of the second application, the method further comprises:
determining a vertical domain service control in the first application, wherein the vertical domain service control is used to limit a display region of the first interface; and
displaying the first interface in the vertical domain service control.

4. The method according to claim 3, wherein the first application corresponds to a graphics node tree, the graphics node tree comprises a graphics node tree identifier, the graphics node tree identifier comprises an identifier of the vertical domain service control, and loading the first interface into the first application comprises:
mounting a node of the first interface on the graphics node tree of the first application based on the identifier of the vertical domain service control; and
loading the first interface into the first application based on the graphics node tree on which the node of the first interface is mounted.

5. The method according to any one of claims 2 to 4, wherein the vertical domain service independent process is used to run a first vertical domain service and a second vertical domain service, the first vertical domain service comprises a control corresponding to the second vertical domain service, the first vertical domain service and the second vertical domain service are run in the same vertical domain service independent process, and the first vertical domain service is different from the second vertical domain service.

6. The method according to any one of claims 1 to 5, wherein the method further comprises:
displaying a user interface of a third application, wherein the user interface of the third application comprises second shared content of the second application;
receiving a second operation performed by the user on the second shared content of the second application; and
in response to the second operation on the second shared content, running a vertical domain service independent process of the second application and displaying a third interface of a vertical domain service of the second application, wherein the vertical domain service of the second application comprises a display window of the third application, and the display window of the third application is different from a display window of the first application.

7. The method according to claim 6, wherein the vertical domain service independent process of the second application is run in a foreground when at least one of the first application and the third application is run in the foreground.

8. The method according to claim 6, wherein the vertical domain service independent process of the second application is run in a background when both the first application and the third application are run in the background.

9. The method according to any one of claims 6 to 8, wherein the vertical domain service independent process that is of the second application and that is started by the first application and the vertical domain service independent process that is of the second application and that is started by the third application are a same process.

10. The method according to any one of claims 1 to 9, wherein the first interface of the vertical domain service of the second application is displayed in at least one of a full-screen mode, a floating window mode, or a control embedding mode.

11. A cross-application interface display method, applied to an electronic device, wherein the method comprises:
displaying a user interface of a first application, wherein the user interface comprises first shared content of a second application;
receiving a first operation performed by a user on the first shared content;
determining at least one target application in response to the first operation, wherein a configuration file of the first operation is registered in the at least one target application;
displaying the at least one target application to the user on a display interface of the first application;
receiving a third operation on the at least one target application, wherein the third operation is used to select a fourth application from the at least one target application; and
in response to the third operation, running a vertical domain service independent process of the fourth application and displaying a first interface of a vertical domain service of the fourth application; and when a main process of the fourth application is running, displaying a second interface of the main process of the fourth application, wherein the vertical domain service independent process is different from the main process.

12. The method according to any one of claims 1 to 11, wherein the first operation comprises any one of a preview operation, a share operation, or an edit operation.

13. An electronic device, wherein the electronic device comprises at least one processor, and the at least one processor is coupled to at least one memory; and
the at least one processor is configured to execute a computer program or instructions in the at least one memory, to enable the electronic device to perform the method according to any one of claims 1 to 12.

14. A computer-readable storage medium, wherein the computer-readable storage medium stores a computer program or instructions, and when a computer reads and executes the computer program or the instructions, the computer is enabled to perform the method according to any one of claims 1 to 12.

15. A chip, comprising a processor, configured to perform the method according to any one of claims 1 to 12.
